(19) Europäisches Patentamt / European Patent Office / Office européen des brevets

(11) **EP 4 459 985 A1**

(12) **EUROPEAN PATENT APPLICATION**
published in accordance with Art. 153(4) EPC

(43) Date of publication:
**06.11.2024 Bulletin 2024/45**

(21) Application number: **23737362.6**

(22) Date of filing: **04.01.2023**

(51) International Patent Classification (IPC):
*H04N 19/107* (2014.01)    *H04N 19/117* (2014.01)
*H04N 19/176* (2014.01)    *H04N 19/70* (2014.01)
*H04N 19/109* (2014.01)    *H04N 19/513* (2014.01)

(52) Cooperative Patent Classification (CPC):
**H04N 19/107; H04N 19/109; H04N 19/117;
H04N 19/176; H04N 19/513; H04N 19/70**

(86) International application number:
**PCT/KR2023/000130**

(87) International publication number:
**WO 2023/132614 (13.07.2023 Gazette 2023/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.01.2022  KR 20220000677
30.12.2022  KR 20220190744**

(71) Applicants:
• **Hyundai Motor Company
Seoul 06797 (KR)**
• **Kia Corporation
Seocho-gu
Seoul 06797 (KR)**

(72) Inventors:
• **HEO, Jin
Yongin-si, Gyeonggi-do 16836 (KR)**
• **PARK, Seung Wook
Yongin-si, Gyeonggi-do 16847 (KR)**

(74) Representative: **Isarpatent
Patent- und Rechtsanwälte
Barth Hassa Peckmann & Partner mbB
Friedrichstraße 31
80801 München (DE)**

(54) **VIDEO ENCODING/DECODING METHOD AND DEVICE FOR IMPROVING MERGE MODE**

(57)    A method and a device for encoding/decoding a video are provided. A method for decoding a video according to the present disclosure includes determining a first mode based on at least one of a combined inter/intra prediction (CIIP) mode, a geometric partitioning mode, and a merge mode with motion vector difference. The method for decoding the video also includes determining a motion vector from a merging candidate list. The method for decoding the video also includes generating a prediction block of a current block based on the first mode and the motion vector.

*FIG. 22*

**Description**

[Technical Field]

The present disclosure in some embodiments relates to a video encoding/decoding method and a video encoding/decoding apparatus that improve merge modes. More particularly, the present disclosure relates to a video encoding/decoding method and a video encoding/decoding apparatus for adding a new kind of merge mode to a regular merge mode to generate a prediction block of the current block.

[Background]

The statements in this section merely provide background information related to the present disclosure and do not necessarily constitute prior art.

Since the volume of video data is larger than the volume of voice data or still image data, storing or transmitting video data without processing the video data by compression requires a lot of hardware resources including memory

Accordingly, in storing or transmitting video data, the video data is generally compressed using an encoder so as to be stored or transmitted. Then, a decoder receives the compressed video data and decompresses and reproduces the video data. Compression techniques for such video include H.264/AVC, high efficiency video coding (HEVC), and versatile video coding (VVC), which improves coding efficiency by about 30% or more compared to HEVC.

However, the video size, resolution, and frame rate are gradually increasing, and thus the amount of data to be encoded is also increasing. Accordingly, a new compression technique having better encoding efficiency and higher image quality than the existing compression technique is required.

A combined inter/intra prediction (CIIP) mode is a method of generating a prediction block of the current block by weighted averaging the intra-prediction signal and the inter-prediction signal. A geometric partitioning mode is a method of generating the prediction block of the current block by partitioning one Coding Unit (CU) into two regions, performing inter prediction on the two partitioned regions independently to generate two inter-prediction signals and weighted-average the two inter-prediction signals. A 'merge mode with motion vector difference' is adapted to refine a motion vector by adding the motion vector difference to the motion vector induced by the regular merge mode. There is a need for a combination of the CIIP mode, the geometric partitioning mode, and the 'merge mode with motion vector difference to improve the accuracy of the merge mode and increase the coding efficiency.

[Disclosure]

[Technical Problem]

An object of the present disclosure is to provide a method and an apparatus for generating a prediction block of the current block based on the combined inter/intra prediction (CIIP) mode and the geometric partitioning mode.

Another object of the present disclosure is to provide a method and an apparatus for generating a prediction block of the current block based on the CIIP mode and the merge mode with motion vector difference.

Another object of the present disclosure is to provide a method and an apparatus for generating a prediction block of the current block based on the geometric partitioning mode and the merge mode with motion vector difference.

Another object of the present disclosure is to provide a method and an apparatus for generating a prediction block of the current block based on the CIIP mode, geometric partitioning mode, and merge mode with motion vector difference.

Another object of the present disclosure is to provide methods and an apparatus for improving video encoding/decoding efficiency.

Another object of the present disclosure is to provide a recording medium storing a bitstream generated by a video encoding/decoding method or a video encoding/decoding apparatus of the present disclosure.

Another object of the present disclosure is to provide a method and apparatus for transmitting a bitstream generated by a video encoding/decoding method or an apparatus of the present disclosure.

[Summary]

According to a present disclosure, a video decoding method comprising: determining a first mode based on at least one of a combined inter/intra prediction (CIIP) mode, a geometric partitioning mode, and a merge mode with motion vector difference, determining a motion vector from a merging candidate list, and generating a prediction block of a current block based on the first mode and the motion vector.

According to the present disclosure, a video encoding method comprising: determining a first mode based on at least one of a combined inter/intra prediction (CIIP) mode, a geometric partitioning mode, and a merge mode with motion vector difference, determining a motion vector from a merging candidate list, and generating a prediction block of a current block based on the first mode and the motion vector.

In addition, according to the present disclosure, it is possible to provide a method of transmitting a bitstream generated by the video encoding method or apparatus according to the present disclosure.

In addition, according to the present disclosure, it is possible to provide a recording medium storing a bitstream generated by the video encoding method or apparatus according to the present disclosure.

In addition, according to the present disclosure, it is possible to provide a recording medium storing a bitstream received and decoded by the video decoding apparatus according to the present disclosure and used to reconstruct a video.

[Advantageous Effects]

According to the present disclosure, the method and an apparatus for generating a prediction block of the current block based on the combined inter/intra prediction (CIIP) mode and the geometric partitioning mode may be provided.

In addition, according to the present disclosure, the method and an apparatus for generating a prediction block of the current block based on the CIIP mode and the merge mode with motion vector difference may be provided.

In addition, according to the present disclosure, the method and an apparatus for generating a prediction block of the current block based on the geometric partitioning mode and the merge mode with motion vector difference may be provided.

In addition, according to the present disclosure, the method and an apparatus for generating a prediction block of the current block based on the CIIP mode, geometric partitioning mode, and merge mode with motion vector difference may be provided.

In addition, according to the present disclosure, the method and an apparatus for improving video encoding/decoding efficiency may be provided.

The effects that may be obtained from the present disclosure are not limited to the effects mentioned above, and other effects not mentioned may be clearly understood by those having ordinary skill in the art from the description below.

[Brief Description of the Drawings]

FIG. 1 is a block diagram of a video encoding apparatus that may implement a technology of the present disclosure.

FIG. 2 illustrates a method for partitioning a block using a quadtree plus binarytree ternarytree (QTBTTT) structure.

FIGS. 3A and 3B illustrate a plurality of intra prediction modes including wide-angle intra prediction modes.

FIG. 4 illustrates neighboring blocks of a current block.

FIG. 5 is a block diagram of a video decoding apparatus that may implement technologies of the present disclosure.

FIG. 6 is a diagram illustrating a method of generating a prediction block of the current block in a combined inter/intra prediction (CIIP) mode.

FIG. 7 is a diagram illustrating neighboring blocks referenced to determine weighting values in the combined inter/intra prediction mode, according to at least one embodiment of the present disclosure.

FIG. 8 is a diagram for describing a method of determining weighting values in the combined inter/intra prediction mode, according to at least one embodiment of the present disclosure.

FIG. 9 is a diagram describing a method of applying a geometric partitioning mode to a 32x32 block, according to at least one embodiment of the present disclosure.

FIGS. 10A and 10B are diagrams illustrating an angle parameter and a distance parameter in the geometric partitioning mode, according to at least one embodiment of the present disclosure.

FIG. 11 is a lookup table of partition direction information in the geometric partitioning mode, according to at least one embodiment of the present disclosure.

FIG. 12 is a diagram illustrating the direction information of a motion vector difference, according to at least one embodiment of the present disclosure.

FIG. 13 is a diagram illustrating distance information of a motion vector difference, according to at least one embodiment of the present disclosure.

FIG. 14 is a flowchart of a method of applying inter prediction, according to at least one embodiment of the present disclosure.

FIG. 15 is a flowchart of a method of applying a novel mode in inter prediction, according to at least one embodiment of the present disclosure.

FIG. 16 is a flowchart of a method of applying a novel mode in inter prediction, according to another embodiment of the present disclosure.

FIG. 17 is a flowchart of a method of applying a novel mode in inter prediction, according to yet another embodiment of the present disclosure.

FIG. 18 is a diagram illustrating a novel mode provided by combining the geometric partitioning mode and the CIIP mode, according to at least one embodiment of the present disclosure.

FIG. 19 is a diagram illustrating a novel mode provided by combining the CIIP mode and the merge mode with motion vector difference, according to at least one embodiment of the present disclosure.

FIG. 20 is a diagram illustrating a novel mode provided by combining the geometric partitioning mode and the merge mode with motion vector difference, according to at least one embodiment of the present disclosure.

FIG. 21 is a diagram illustrating a novel mode provided by combining the geometric partitioning mode, the CIIP mode, and the merge mode with motion vector difference, according to at least one embodiment of the present disclosure.

FIG. 22 is a diagram illustrating a video decoding process, according to an embodiment of the present disclosure.

FIG. 23 is a diagram illustrating a video encoding process, according to an embodiment of the present disclosure.

[Detailed Description]

Hereinafter, some embodiments of the present disclosure are described in detail with reference to the accompanying illustrative drawings. In the following description, like reference numerals designate like elements, although the elements are shown in different drawings. Further, in the following description of some embodiments, detailed descriptions of related known components and functions when considered to obscure the subject of the present disclosure have been omitted for the purpose of clarity and for brevity.

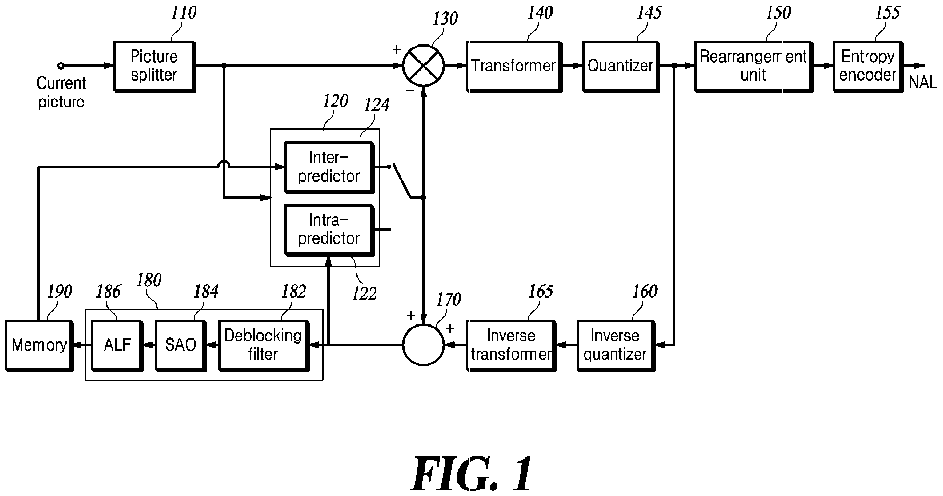

FIG. 1 is a block diagram of a video encoding apparatus that may implement technologies of the present disclosure. Hereinafter, referring to illustration of FIG. 1, the video encoding apparatus and components of the apparatus are described.

The encoding apparatus may include a picture splitter 110, a predictor 120, a subtractor 130, a transformer 140, a quantizer 145, a rearrangement unit 150, an entropy encoder 155, an inverse quantizer 160, an inverse transformer 165, an adder 170, a loop filter unit 180, and a memory 190.

Each component of the encoding apparatus may be implemented as hardware or software or implemented as a combination of hardware and software. Further, a function of each component may be implemented as software, and a microprocessor may also be implemented to execute the function of the software corresponding to each component.

One video is constituted by one or more sequences including a plurality of pictures. Each picture is split into a plurality of areas, and encoding is performed for each area. For example, one picture is split into one or more tiles or/and slices. Here, one or more tiles may be defined as a tile group. Each tile or/and slice is split into one or more coding tree units (CTUs). In addition, each CTU is split into one or more coding units (CUs) by a tree structure. Information applied to each CU is encoded as a syntax of the CU and information commonly applied to the CUs included in one CTU is encoded as the syntax of the CTU. Further, information commonly applied to all blocks in one slice is encoded as the syntax of a slice header, and information applied to all blocks constituting one or more pictures is encoded to a picture parameter set (PPS) or a picture header. Furthermore, information, which the plurality of pictures commonly refers to, is encoded to a sequence parameter set (SPS). In addition, information, which one or more SPS commonly refer to, is encoded to a video parameter set (VPS). Further, information commonly applied to one tile or tile group may also be encoded as the syntax of a tile or tile group header. The syntaxes included in the SPS, the PPS, the slice header, the tile, or the tile group header may be referred to as a high level syntax.

The picture splitter 110 determines a size of a coding tree unit (CTU). Information on the size of the CTU (CTU size) is encoded as the syntax of the SPS or the PPS and delivered to a video decoding apparatus.

The picture splitter 110 splits each picture constituting the video into a plurality of coding tree units (CTUs) having a predetermined size and then recursively splits the CTU by using a tree structure. A leaf node in the tree structure becomes the coding unit (CU), which is a basic unit of encoding.

The tree structure may be a quadtree (QT) in which a higher node (or a parent node) is split into four lower nodes (or child nodes) having the same size. The tree structure may also be a binarytree (BT) in which the higher node is split into two lower nodes. The tree structure may also be a ternarytree (TT) in which the higher node is split into three lower nodes at a ratio of 1 :2:1. The tree structure may also be a structure in which two or more structures among the QT structure, the BT structure, and the TT structure are mixed. For example, a quadtree plus binarytree (QTBT) structure may be used or a quadtree plus binarytree ternarytree (QTBTTT) structure may be used. Here, a BTTT is added to the tree structures to be referred to as a multiple-type tree (MTT).

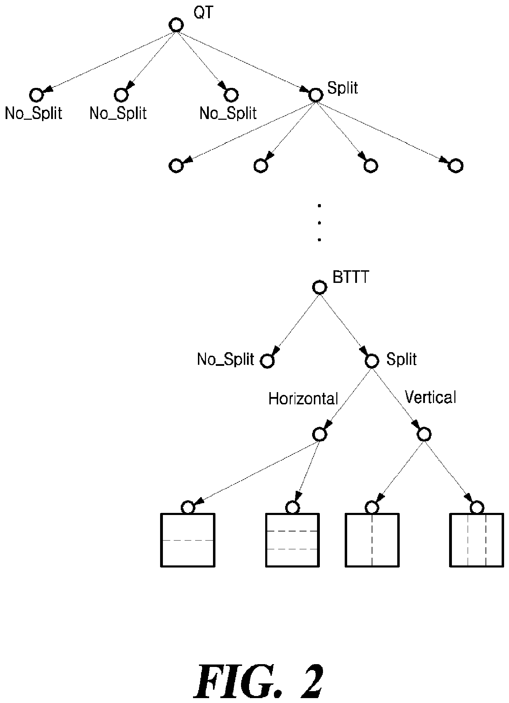

FIG. 2 is a diagram for describing a method for splitting a block by using a QTBTTT structure.

As illustrated in FIG. 2, the CTU may first be split into the QT structure. Quadtree splitting may be recursive until the size of a splitting block reaches a minimum block size (MinQTSize) of the leaf node permitted in the QT. A first flag (QT_split_flag) indicating whether each node of the QT structure is split into four nodes of a lower layer is encoded by the entropy encoder 155 and signaled to the video decoding apparatus. When the leaf node of the QT is not larger than a maximum block size (MaxBTSize) of a root node permitted in the BT, the leaf node may be further split into at least one of the BT structure or the TT structure. A plurality of split directions may be present in the BT structure and/or the TT structure. For example, there may be two directions, i.e., a direction in which the block of the corresponding node is split horizontally and a direction in which the block of the corresponding node is split vertically. As illustrated in FIG. 2, when the MTT splitting starts, a second flag (mtt_split_flag) indicating whether the nodes are split, and a flag additionally indicating the split direction (vertical or horizontal), and/or a flag indicating a split type (binary or ternary) if the nodes are split are encoded by the entropy encoder 155 and signaled to the video decoding apparatus.

Alternatively, prior to encoding the first flag (QT_split_flag) indicating whether each node is split into four nodes of the lower layer, a CU split flag (split_cu_flag) indicating whether the node is split may also be encoded. When a value of the CU split flag (split_cu_flag) indicates that each node is not split, the block of the corresponding node becomes the leaf node in the split tree structure and becomes the CU, which is the basic unit of encoding. When the value of the CU split flag (split_cu_flag) indicates that each node is split, the video encoding apparatus starts encoding the first flag first by the above-described scheme.

When the QTBT is used as another example of the tree structure, there may be two types, i.e., a type (i.e., symmetric horizontal splitting) in which the block of the corresponding node is horizontally split into two blocks having the same size and a type (i.e., symmetric vertical splitting) in which the block of the corresponding node is vertically split into two blocks having the same size. A split flag (split_flag) indicating whether each node of the BT structure is split into the block of the lower layer and split type information indicating a splitting type are encoded by the entropy encoder 155 and delivered to the video decoding apparatus. Meanwhile, a type in which the block of the corresponding node is split into two blocks of a form of being asymmetrical to each other may be additionally present. The asymmetrical form may include a form in which the block of the corresponding node is split into two rectangular blocks having a size ratio of 1:3 or may also include a form in which the block of the corresponding node is split in a diagonal direction.

The CU may have various sizes according to QTBT or QTBTTT splitting from the CTU. Hereinafter, a block corresponding to a CU (i.e., the leaf node of the QTBTTT) to be encoded or decoded is referred to as a "current block". As the QTBTTT splitting is adopted, a shape of the current block may also be a rectangular shape in addition to a square shape.

The predictor 120 predicts the current block to generate a prediction block. The predictor 120 includes an intra predictor 122 and an inter predictor 124.

In general, each of the current blocks in the picture may be predictively coded. In general, the prediction of the current block may be performed by using an intra prediction technology (using data from the picture including the current block) or an inter prediction technology (using data from a picture coded before the picture including the current block). The inter prediction includes both unidirectional prediction and bidirectional prediction.

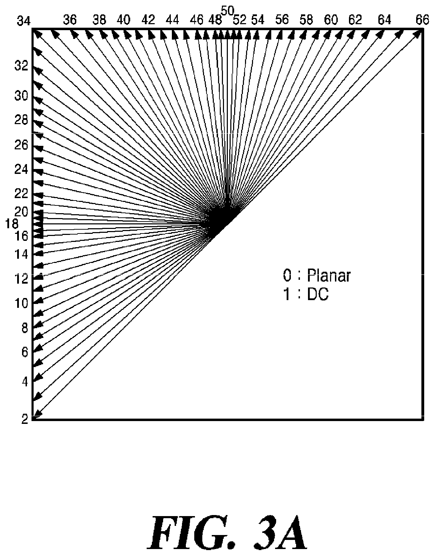

The intra predictor 122 predicts pixels in the current block by using pixels (reference pixels) positioned on a neighbor of the current block in the current picture including the current block. There is a plurality of intra prediction modes according to the prediction direction. For example, as illustrated in FIG. 3A, the plurality of intra prediction modes may include 2 non-directional modes including a Planar mode and a DC mode and may include 65 directional modes. A neighboring pixel and an arithmetic equation to be used are defined differently according to each prediction mode.

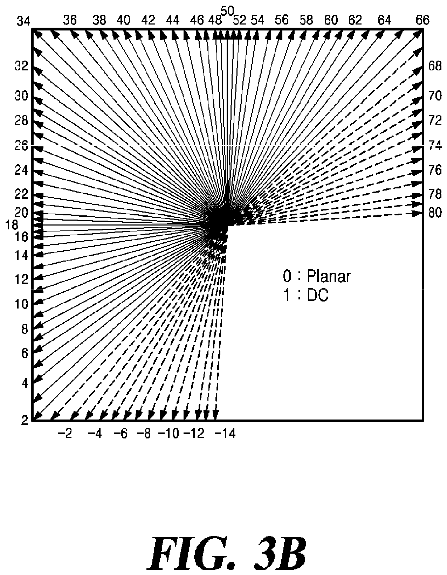

For efficient directional prediction for the current block having a rectangular shape, directional modes (#67 to #80, intra prediction modes #-1 to #-14) illustrated as dotted arrows in FIG. 3B may be additionally used. The directional modes may be referred to as "wide angle intra-prediction modes". In FIG. 3B, the arrows indicate corresponding reference samples used for the prediction and do not represent the prediction directions. The prediction direction is opposite to a direction indicated by the arrow. When the current block has the rectangular shape, the wide angle intra-prediction modes are modes in which the prediction is performed in an opposite direction to a specific directional mode without additional bit transmission. In this case, among the wide angle intra-prediction modes, some wide angle intra-prediction modes usable for the current block may be determined by a ratio of a width and a height of the current block having the rectangular shape. For example, when the current block has a rectangular shape in which the height is smaller than the width, wide angle intra-prediction modes (intra prediction modes #67 to #80) having an angle smaller than 45 degrees are usable. When the current block has a rectangular shape in which the width is larger than the height, the wide angle intra-prediction modes having an angle larger than -135 degrees are usable.

The intra predictor 122 may determine an intra prediction to be used for encoding the current block. In some examples, the intra predictor 122 may encode the current block by using multiple intra prediction modes and also select an appropriate intra prediction mode to be used from tested modes. For example, the intra predictor 122 may calculate rate-distortion values by using a rate-distortion analysis for multiple tested intra prediction modes and also select an intra prediction mode having best rate-distortion features among the tested modes.

The intra predictor 122 selects one intra prediction mode among a plurality of intra prediction modes and predicts the current block by using a neighboring pixel (reference pixel) and an arithmetic equation determined according to the selected intra prediction mode. Information on the selected intra prediction mode is encoded by the entropy encoder 155 and delivered to the video decoding apparatus.

The inter predictor 124 generates the prediction block for the current block by using a motion compensation process. The inter predictor 124 searches a block most similar to the current block in a reference picture encoded and decoded earlier than the current picture and generates the prediction block for the current block by using the searched block. In addition, a motion vector (MV) is generated, which corresponds to a displacement between the current bock in the current picture and the prediction block in the reference picture. In general, motion estimation is performed for a luma component, and a motion vector calculated based on the luma component is used for both the luma component and a chroma component. Motion information including information on the reference picture and information on the motion vector used for predicting the current block is encoded by the entropy encoder 155 and delivered to the video decoding apparatus.

The inter predictor 124 may also perform interpolation for the reference picture or a reference block in order to increase accuracy of the prediction. In other words, sub-samples between two contiguous integer samples are interpolated by applying filter coefficients to a plurality of contiguous integer samples including two integer samples. When a process of searching a block most similar to the current block is performed for the interpolated reference picture, not integer sample unit precision but decimal unit precision may be expressed for the motion vector. Precision or resolution of the motion vector may be set differently for each target area to be encoded, e.g., a unit such as the slice, the tile, the CTU, the CU, etc. When such an adaptive motion vector resolution (AMVR) is applied, information on the motion vector resolution to be applied to each target area should be signaled for each target area. For example, when the target area is the CU, the information on the motion vector resolution applied for each CU is signaled. The information on the motion vector resolution may be information representing precision of a motion vector difference to be described below.

Meanwhile, the inter predictor 124 may perform inter prediction by using bi-prediction. In the case of bi-prediction, two reference pictures and two motion vectors representing a block position most similar to the current block in each reference picture are used. The inter predictor 124 selects a first reference picture and a second reference picture from reference picture list 0 (RefPicList0) and reference picture list 1 (RefPicList1), respectively. The inter predictor 124 also searches blocks most similar to the current blocks in the respective reference pictures to generate a first reference block and a second reference block. In addition, the prediction block for the current block is generated by averaging or weighted-averaging the first reference block and the second reference block. In addition, motion information including information on two reference pictures used for predicting the current block and information on two motion vectors is delivered to the entropy encoder 155. Here, reference picture list 0 may be constituted by pictures before the current picture in a display order among pre-reconstructed pictures, and reference picture list 1 may be constituted by pictures after the current picture in the display order among the pre-reconstructed pictures. However, although not particularly limited thereto, the pre-reconstructed pictures after the current picture in the display order may be additionally included in reference picture list 0. Inversely, the pre-reconstructed pictures before the current picture may also be additionally included in reference picture list 1.

In order to minimize a bit quantity consumed for encoding the motion information, various methods may be used.

For example, when the reference picture and the motion vector of the current block are the same as the reference picture and the motion vector of the neighboring block, information capable of identifying the neighboring block is encoded to deliver the motion information of the current block to the video decoding apparatus. Such a method is referred to as a merge mode.

In the merge mode, the inter predictor 124 selects a predetermined number of merge candidate blocks (hereinafter, referred to as a "merge candidate") from the neighboring blocks of the current block.

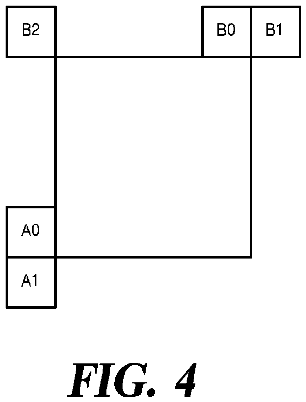

As a neighboring block for deriving the merge candidate, all or some of a left block A0, a bottom left block A1, a top block B0, a top right block B1, and a top left block B2 adjacent to the current block in the current picture may be used as illustrated in FIG. 4. Further, a block positioned within the reference picture (may be the same as or different from the reference picture used for predicting the current block) other than the current picture at which the current block is positioned may also be used as the merge candidate. For example, a co-located block with the current block within the reference picture or blocks adjacent to the co-located block may be additionally used as the merge candidate. If the number of merge candidates selected by the method described above is smaller than a preset number, a zero vector is added to the merge candidate.

The inter predictor 124 configures a merge list including a predetermined number of merge candidates by using the neighboring blocks. A merge candidate to be used as the motion information of the current block is selected from the merge candidates included in the merge list, and merge index information for identifying the selected candidate is generated. The generated merge index information is encoded by the entropy encoder 155 and delivered to the video decoding apparatus.

A merge skip mode is a special case of the merge mode. After quantization, when all transform coefficients for entropy encoding are close to zero, only the neighboring block selection information is transmitted without transmitting residual signals. By using the merge skip mode, it is possible to achieve a relatively high encoding efficiency for images with slight motion, still images, screen content images, and the like.

Hereafter, the merge mode and the merge skip mode are collectively referred to as the merge/skip mode.

Another method for encoding the motion information is an advanced motion vector prediction (AMVP) mode.

In the AMVP mode, the inter predictor 124 derives motion vector predictor candidates for the motion vector of the current block by using the neighboring blocks of the current block. As a neighboring block used for deriving the motion vector predictor candidates, all or some of a left block A0, a bottom left block A1, a top block B0, a top right block B1, and a top left block B2 adjacent to the current block in the current picture illustrated in FIG. 4 may be used. Further, a block positioned within the reference picture (may be the same as or different from the reference picture used for predicting the current block) other than the current picture at which the current block is positioned may also be used as the neighboring block used for deriving the motion vector predictor candidates. For example, a co-located block with the current block within the reference picture or blocks adjacent to the co-located block may be used. If the number of motion vector candidates selected by the method described above is smaller than a preset number, a zero vector is added to the motion vector candidate.

The inter predictor 124 derives the motion vector predictor candidates by using the motion vector of the neighboring blocks and determines motion vector predictor for the motion vector of the current block by using the motion vector predictor candidates. In addition, a motion vector difference is calculated by subtracting motion vector predictor from the motion vector of the current block.

The motion vector predictor may be obtained by applying a pre-defined function (e.g., center value and average value computation, etc.) to the motion vector predictor candidates. In this case, the video decoding apparatus also knows the pre-defined function. Further, since the neighboring block used for deriving the motion vector predictor candidate is a block in which encoding and decoding are already completed, the video decoding apparatus may also already know the motion vector of the neighboring block. Therefore, the video encoding apparatus does not need to encode information for identifying the motion vector predictor candidate. Accordingly, in this case, information on the motion vector difference and information on the reference picture used for predicting the current block are encoded.

Meanwhile, the motion vector predictor may also be determined by a scheme of selecting any one of the motion vector predictor candidates. In this case, information for identifying the selected motion vector predictor candidate is additional encoded jointly with the information on the motion vector difference and the information on the reference picture used for predicting the current block.

The subtractor 130 generates a residual block by subtracting the prediction block generated by the intra predictor 122 or the inter predictor 124 from the current block.

The transformer 140 transforms residual signals in a residual block having pixel values of a spatial domain into transform coefficients of a frequency domain. The transformer 140 may transform residual signals in the residual block by using a total size of the residual block as a transform unit or also split the residual block into a plurality of subblocks and may perform the transform by using the subblock as the transform unit. Alternatively, the residual block is divided into two subblocks, which are a transform area and a non-transform area, to transform the residual signals by using only the transform area subblock as the transform unit. Here, the transform area subblock may be one of two rectangular blocks having a size ratio of 1:1 based on a horizontal axis (or vertical axis). In this case, a flag (cu_sbt_flag) indicates that only the subblock is transformed, and directional (vertical/horizontal) information (cu_sbt_horizontal_flag) and/or positional information (cu sbt_pos flag) are encoded by the entropy encoder 155 and signaled to the video decoding apparatus. Further, a size of the transform area subblock may have a size ratio of 1:3 based on the horizontal axis (or vertical axis). In this case, a flag (cu sbt_quad flag) dividing the corresponding splitting is additionally encoded by the entropy encoder 155 and signaled to the video decoding apparatus.

Meanwhile, the transformer 140 may perform the transform for the residual block individually in a horizontal direction and a vertical direction. For the transform, various types of transform functions or transform matrices may be used. For example, a pair of transform functions for horizontal transform and vertical transform may be defined as a multiple transform set (MTS). The transformer 140 may select one transform function pair having highest transform efficiency in the MTS and may transform the residual block in each of the horizontal and vertical directions. Information (mts_idx) on the transform function pair in the MTS is encoded by the entropy encoder 155 and signaled to the video decoding apparatus.

The quantizer 145 quantizes the transform coefficients output from the transformer 140 using a quantization parameter and outputs the quantized transform coefficients to the entropy encoder 155. The quantizer 145 may also immediately quantize the related residual block without the transform for any block or frame. The quantizer 145 may also apply different quantization coefficients (scaling values) according to positions of the transform coefficients in the transform block. A quantization matrix applied to quantized transform coefficients arranged in 2 dimensional may be encoded and signaled to the video decoding apparatus.

The rearrangement unit 150 may perform realignment of coefficient values for quantized residual values.

The rearrangement unit 150 may change a 2D coefficient array to a 1D coefficient sequence by using coefficient scanning. For example, the rearrangement unit 150 may output the 1D coefficient sequence by scanning a DC coefficient to a highfrequency domain coefficient by using a zig-zag scan or a diagonal scan. According to the size of the transform unit and the intra prediction mode, vertical scan of scanning a 2D coefficient array in a column direction and horizontal scan of scanning a 2D block type coefficient in a row direction may also be used instead of the zig-zag scan. In other words, according to the size of the transform unit and the intra prediction mode, a scan method to be used may be determined among the zig-zag scan, the diagonal scan, the vertical scan, and the horizontal scan.

The entropy encoder 155 generates a bitstream by encoding a sequence of 1D quantized transform coefficients output from the rearrangement unit 150 by using various encoding schemes including a Context-based Adaptive Binary Arithmetic Code (CABAC), an Exponential Golomb, or the like.

Further, the entropy encoder 155 encodes information such as a CTU size, a CTU split flag, a QT split flag, an MTT split type, an MTT split direction, etc., related to the block splitting to allow the video decoding apparatus to split the block equally to the video encoding apparatus. Further, the entropy encoder 155 encodes information on a prediction type indicating whether the current block is encoded by intra prediction or inter prediction. The entropy encoder 155 encodes intra prediction information (i.e., information on an intra prediction mode) or inter prediction information (in the case of the merge mode, a merge index and in the case of the AMVP mode, information on the reference picture index and the motion vector difference) according to the prediction type. Further, the entropy encoder 155 encodes information related to quantization, i.e., information on the quantization parameter and information on the quantization matrix.

The inverse quantizer 160 dequantizes the quantized transform coefficients output from the quantizer 145 to generate the transform coefficients. The inverse transformer 165 transforms the transform coefficients output from the inverse quantizer 160 into a spatial domain from a frequency domain to reconstruct the residual block.

The adder 170 adds the reconstructed residual block and the prediction block generated by the predictor 120 to reconstruct the current block. Pixels in the reconstructed current block may be used as reference pixels when intra-predicting a next-order block.

The loop filter unit 180 performs filtering for the reconstructed pixels in order to reduce blocking artifacts, ringing artifacts, blurring artifacts, etc., which occur due to block based prediction and transform/quantization. The loop filter unit 180 as an in-loop filter may include all or some of a deblocking filter 182, a sample adaptive offset (SAO) filter 184, and an adaptive loop filter (ALF) 186.

The deblocking filter 182 filters a boundary between the reconstructed blocks in order to remove a blocking artifact, which occurs due to block unit encoding/decoding, and the SAO filter 184 and the ALF 186 perform additional filtering for a deblocked filtered video. The SAO filter 184 and the ALF 186 are filters used for compensating differences between the reconstructed pixels and original pixels, which occur due to lossy coding. The SAO filter 184 applies an offset as a CTU unit to enhance a subjective image quality and encoding efficiency. On the other hand, the ALF 186 performs block unit filtering and compensates distortion by applying different filters by dividing a boundary of the corresponding block and a degree of a change amount. Information on filter coefficients to be used for the ALF may be encoded and signaled to the video decoding apparatus.

The reconstructed block filtered through the deblocking filter 182, the SAO filter 184, and the ALF 186 is stored in the memory 190. When all blocks in one picture are reconstructed, the reconstructed picture may be used as a reference picture for inter predicting a block within a picture to be encoded afterwards.

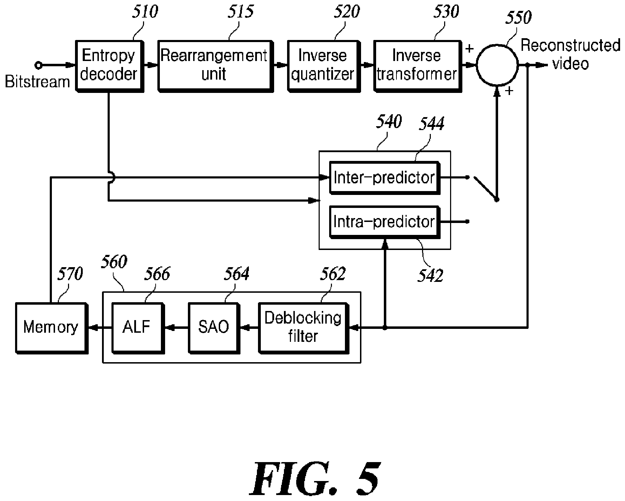

FIG. 5 is a functional block diagram of a video decoding apparatus that may implement the technologies of the present disclosure. Hereinafter, referring to FIG. 5, the video decoding apparatus and components of the apparatus are described.

The video decoding apparatus may include an entropy decoder 510, a rearrangement unit 515, an inverse quantizer 520, an inverse transformer 530, a predictor 540, an adder 550, a loop filter unit 560, and a memory 570.

Similar to the video encoding apparatus of FIG. 1, each component of the video decoding apparatus may be implemented as hardware or software or implemented as a combination of hardware and software. Further, a function of each component may be implemented as the software, and a microprocessor may also be implemented to execute the function of the software corresponding to each component.

The entropy decoder 510 extracts information related to block splitting by decoding the bitstream generated by the video encoding apparatus to determine a current block to be decoded and extracts prediction information required for restoring the current block and information on the residual signals.

The entropy decoder 510 determines the size of the CTU by extracting information on the CTU size from a sequence parameter set (SPS) or a picture parameter set (PPS) and splits the picture into CTUs having the determined size. In addition, the CTU is determined as a highest layer of the tree structure, i.e., a root node, and split information for the CTU may be extracted to split the CTU by using the tree structure.

For example, when the CTU is split by using the QTBTTT structure, a first flag (QT_split_flag) related to splitting of the QT is first extracted to split each node into four nodes of the lower layer. In addition, a second flag (mtt_split_flag), a split direction (vertical/horizontal), and/or a split type (binary/ternary) related to splitting of the MTT are extracted with respect to the node corresponding to the leaf node of the QT to split the corresponding leaf node into an MTT structure. As a result, each of the nodes below the leaf node of the QT is recursively split into the BT or TT structure.

As another example, when the CTU is split by using the QTBTTT structure, a CU split flag (split_cu_flag) indicating whether the CU is split is extracted. When the corresponding block is split, the first flag (QT_split_flag) may also be extracted. During a splitting process, with respect to each node, recursive MTT splitting of 0 times or more may occur after recursive QT splitting of 0 times or more. For example, with respect to the CTU, the MTT splitting may immediately occur or on the contrary, only QT splitting of multiple times may also occur.

As another example, when the CTU is split by using the QTBT structure, the first flag (QT_split_flag) related to the splitting of the QT is extracted to split each node into four nodes of the lower layer. In addition, a split flag (split_flag) indicating whether the node corresponding to the leaf node of the QT being further split into the BT, and split direction information are extracted.

Meanwhile, when the entropy decoder 510 determines a current block to be decoded by using the splitting of the tree structure, the entropy decoder 510 extracts information on a prediction type indicating whether the current block is intra predicted or inter predicted. When the prediction type information indicates the intra prediction, the entropy decoder 510 extracts a syntax element for intra prediction information (intra prediction mode) of the current block. When the prediction type information indicates the inter prediction, the entropy decoder 510 extracts information representing a syntax element for inter prediction information, i.e., a motion vector and a reference picture to which the motion vector refers.

Further, the entropy decoder 510 extracts quantization related information and extracts information on the quantized transform coefficients of the current block as the information on the residual signals.

The rearrangement unit 515 may change a sequence of 1D quantized transform coefficients entropy-decoded by the entropy decoder 510 to a 2D coefficient array (i.e., block) again in a reverse order to the coefficient scanning order performed by the video encoding apparatus.

The inverse quantizer 520 dequantizes the quantized transform coefficients and dequantizes the quantized transform coefficients by using the quantization parameter. The inverse quantizer 520 may also apply different quantization coefficients (scaling values) to the quantized transform coefficients arranged in 2D. The inverse quantizer 520 may perform dequantization by applying a matrix of the quantization coefficients (scaling values) from the video encoding apparatus to a 2D array of the quantized transform coefficients.

The inverse transformer 530 generates the residual block for the current block by restoring the residual signals by inversely transforming the dequantized transform coefficients into the spatial domain from the frequency domain.

Further, when the inverse transformer 530 inversely transforms a partial area (subblock) of the transform block, the inverse transformer 530 extracts a flag (cu_sbt_flag) that only the subblock of the transform block is transformed, directional (vertical/horizontal) information (cu_sbt_horizontal_flag) of the subblock, and/or positional information (cu sbt_pos flag) of the subblock. The inverse transformer 530 also inversely transforms the transform coefficients of the corresponding subblock into the spatial domain from the frequency domain to reconstruct the residual signals and fills an area, which is not inversely transformed, with a value of "0" as the residual signals to generate a final residual block for the current block.

Further, when the MTS is applied, the inverse transformer 530 determines the transform index or the transform matrix to be applied in each of the horizontal and vertical directions by using the MTS information (mts_idx) signaled from the video encoding apparatus. The inverse transformer 530 also performs inverse transform for the transform coefficients in the transform block in the horizontal and vertical directions by using the determined transform function.

The predictor 540 may include an intra predictor 542 and an inter predictor 544. The intra predictor 542 is activated when the prediction type of the current block is the intra prediction, and the inter predictor 544 is activated when the prediction type of the current block is the inter prediction.

The intra predictor 542 determines the intra prediction mode of the current block among the plurality of intra prediction modes from the syntax element for the intra prediction mode extracted from the entropy decoder 510. The intra predictor 542 also predicts the current block by using neighboring reference pixels of the current block according to the intra prediction mode.

The inter predictor 544 determines the motion vector of the current block and the reference picture to which the motion vector refers by using the syntax element for the inter prediction mode extracted from the entropy decoder 510.

The adder 550 reconstructs the current block by adding the residual block output from the inverse transformer 530 and the prediction block output from the inter predictor 544 or the intra predictor 542. Pixels within the reconstructed current block are used as a reference pixel upon intra predicting a block to be decoded afterwards.

The loop filter unit 560 as an in-loop filter may include a deblocking filter 562, an SAO filter 564, and an ALF 566. The deblocking filter 562 performs deblocking filtering a boundary between the reconstructed blocks in order to remove the blocking artifact, which occurs due to block unit decoding. The SAO filter 564 and the ALF 566 perform additional filtering for the reconstructed block after the deblocking filtering in order to compensate differences between the reconstructed pixels and original pixels, which occur due to lossy coding. The filter coefficients of the ALF are determined by using information on filter coefficients decoded from the bitstream.

The reconstructed block filtered through the deblocking filter 562, the SAO filter 564, and the ALF 566 is stored in the memory 570. When all blocks in one picture are reconstructed, the reconstructed picture may be used as a reference picture for inter predicting a block within a picture to be encoded afterwards

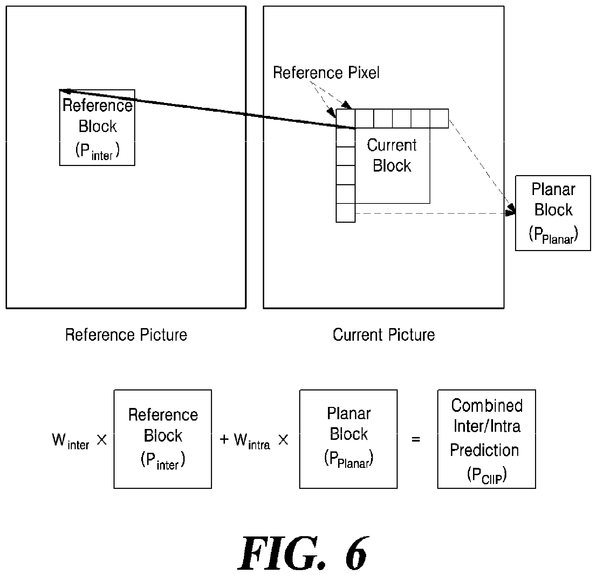

FIG. 6 is a diagram illustrating a method of generating a prediction block of the current block in a combined inter/intra prediction (CIIP) mode. Intra-screen prediction mode may be equivalent to intra-prediction mode. Intra-screen prediction mode and intra-prediction mode may be used interchangeably. Inter-screen prediction mode may be equivalent to inter-prediction mode. Inter-screen prediction mode and inter-prediction mode may be used interchangeably. Combined inter/intra-screen prediction mode may be equivalent to combined inter/intra prediction. Combined inter/intra prediction mode and CIIP mode may be used interchangeably. In CIIP mode, inter-prediction blocks may be generated in the same way as in regular merge mode. Intra-prediction blocks may be generated by applying planar mode to reference pixels in the neighborhood of the current block. By applying weighting values to the generated inter-prediction blocks and intra-prediction blocks, a final CIIP-based prediction block may be generated.

Referring to FIG. 6, a reference block ($P_{inter}$) within a reference picture may be derived based on the merge mode. The planner mode may be applied to the reference pixels neighboring the current block to generate an intra-prediction block ($P_{Planar}$). By applying weighting values to those reference block ($P_{inter}$) and intra-prediction block ($P_{Planar}$), a CIIP-based prediction block ($P_{CIIP}$) may be generated. The weighting value applied to the reference block ($P_{inter}$) may be $W_{inter}$. The weighting value applied to the intra-prediction block ($P_{Planar}$) may be $W_{intra}$. The CIIP-based prediction block ($P_{CIIP}$) may be generated using an equation of

$$P_{CIIP} = ((4 - w) \times P_{inter} + w \times P_{Planar} + 2) \gg 2$$

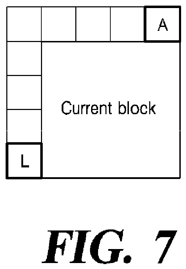

FIG. 7 is a diagram illustrating neighboring blocks referenced to determine weighting values in the combined inter/intra prediction mode, according to at least one embodiment of the present disclosure. In CIIP mode, the weighting values may be determined by considering whether neighboring blocks of the current block are encoded in intra-prediction mode.

Referring to FIG. 7, in CIIP mode, the weighting values may be determined by considering whether the upper neighboring block A and the left neighboring block L adjacent to the current block are encoded in intra-prediction mode.

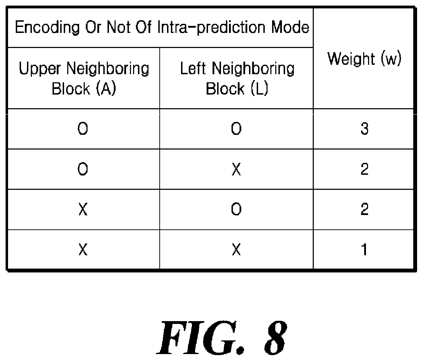

FIG. 8 is a diagram for describing a method of determining weighting values in the combined inter/intra prediction mode, according to at least one embodiment of the present disclosure. If neighboring blocks of the current block encode more intra-prediction modes, the intra-prediction block may be given a large weighting value. Conversely, if the neighboring blocks of the current block encode fewer intra-prediction modes, the intra-prediction block may be given a small weighting value.

Referring to FIG. 8, when the upper neighboring block A and the left neighboring block L of the current block in FIG. 7 encode the intra-prediction mode, the weighting value assigned to the intra-prediction block may be equal to 3. When the upper neighboring block A encodes intra-prediction mode but the left neighboring block L does not, the weighting value assigned to the intra-prediction block may be equal to 2. When the upper neighboring block A does not encode intra-prediction mode but the left neighboring block L does, the weighting value assigned to the intra-prediction block may be equal to 2. When neither the upper neighboring block A nor the left neighboring block L encodes the intra-prediction mode, the weighting value assigned to the intra-prediction block may be equal to 1.

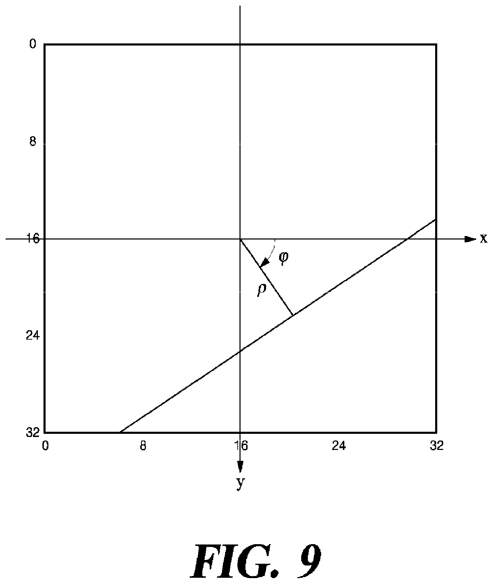

FIG. 9 is a diagram describing a method of applying a geometric partitioning mode to a 32x32 block, according to at least one embodiment of the present disclosure. As to the geometric partitioning mode, one coding unit may be partitioned into two regions by a straight partitioning boundary. The two partitioned regions may each perform inter prediction by using different motion information. Inter-prediction blocks may be generated for the two partitioned regions, respectively. Weighted-averaging the two generated inter-prediction blocks may generate a final prediction block of the geometric partitioning mode. Geometric partitioning mode uses an angle parameter and a distance parameter to set boundary partitioned regions defined by a straight line. Weighted averaging may be equivalent in meaning to weighted summing.

Referring to FIG. 9, a 32x32 block may be partitioned into two regions. An inter prediction may be performed for each of the two partitioned regions. φ may be equal to an angle parameter. ρ may be equal to a distance parameter. Using the angle parameter and the distance parameter, a straight line may be established that divides the 32x32 block.

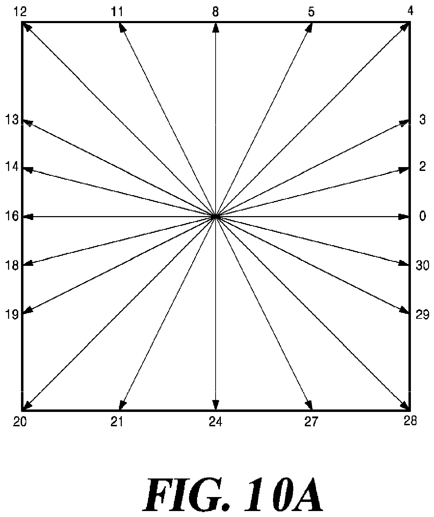

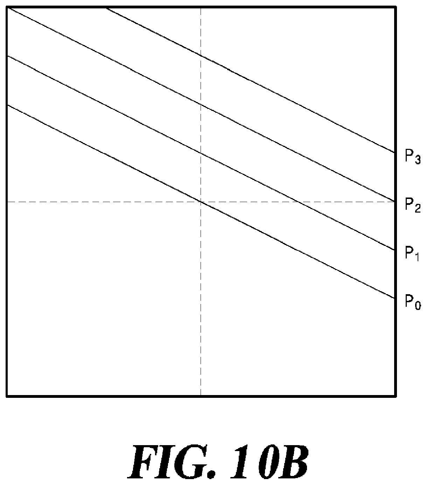

FIGS. 10A and 10B are diagrams illustrating an angle parameter and a distance parameter in the geometric partitioning mode, according to at least one embodiment of the present disclosure.

Referring to FIG. 10A, the angle parameter may be defined as a total of 20 quantized angles by symmetrically partitioning a 360-degree range within the coding unit.

Referring to FIG. 10B, the distance parameter may be defined as four quantized distances. Of the total 80 partition directions that may result from the combination of the angle parameter and the distance parameter, excluded may be 10 partition directions that are redundant and 6 partition directions that overlap with binary tree partitioning and triple tree partitioning. Accordingly, the geometric partitioning mode may utilize a total of 64 partition directions.

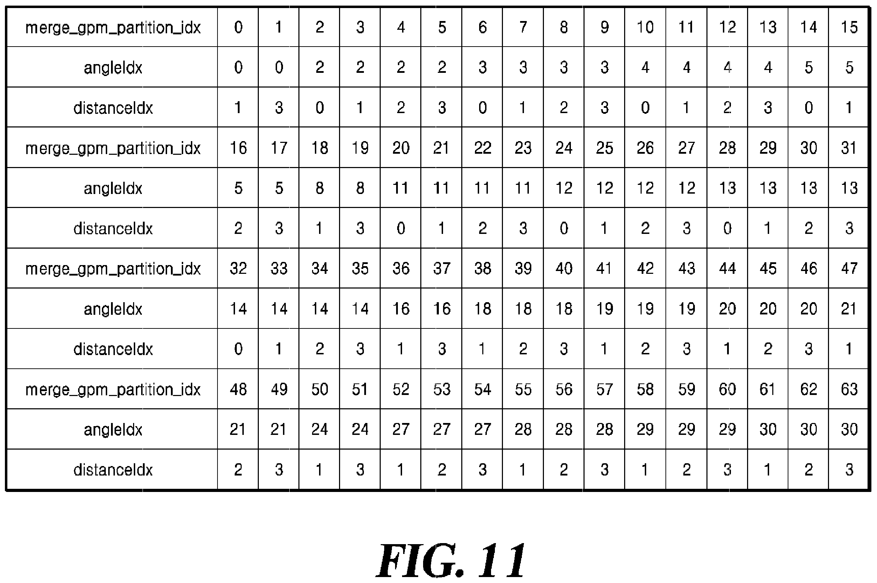

FIG. 11 is a lookup table of partition direction information in the geometric partitioning mode, according to at least one embodiment of the present disclosure. A combination of an angle parameter and a distance parameter may be defined as a lookup table. For each coding unit, the partition direction information may be transmitted. In the geometric partitioning mode, one can compose from the regular merging candidate list a merging candidate list for the geometric partitioning mode, which includes only uni-directional motion information. This simplifies the encoding of motion information and reduces the number of possible combinations. Using the merging candidate list for the geometric partitioning mode, the merging index having been used for each partitioned region may be transmitted.

Referring to FIG. 11, a partition direction information (e.g., merge_gpm_partition_idx) may be determined based on information on an angle parameter (e.g., angleIdx) and information on a distance parameter (e.g., distanceIdx). The merge_gpm_partition_idx according to the combination of angleIdx and distanceIdx may be defined as the lookup table. The value of merge_gpm_partition_idx may be in a range from 0 to 63. The merge_gpm_partition_idx may be transmitted for each coding unit.

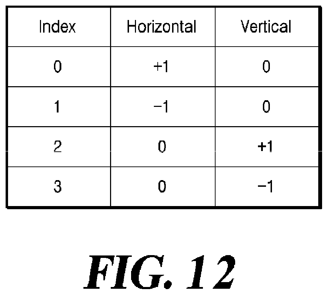

FIG. 12 is a diagram illustrating the direction information of a motion vector difference, according to at least one embodiment of the present disclosure. In a regular merge mode, the motion information in the merging candidate list is used as the motion information for the current block and no additional motion information is transmitted. The regular merge mode has the advantage of minimizing the amount of bits, but it has the limitation that it cannot express the optimal motion information. The merge mode with motion vector difference (MMVD) is capable of compensating the motion information by adding the motion vector difference to the motion vector induced by the regular merge mode.

The merge mode with motion vector difference uses only the first and second candidates from the candidate list of the regular merge mode to reduce complexity. Of the two candidates, one candidate may be selected and that one candidate may have its motion vector set as the initial motion vector. To the initial motion vector, a transmitted motion vector difference information may be added to determine the final motion vector. The motion vector difference information may include the direction information and the distance information.

Referring to FIG. 12, the direction information in the motion vector difference may only allow for correction in a vertical or horizontal direction. The direction information of the motion vector difference may be composed of four directions. Index 0 may be assigned to the direction information of the motion vector difference, which makes corrections by +1 in the horizontal direction and by 0 in the vertical direction. Index 1 may be assigned to direction information for the motion vector difference, which makes corrections by -1 in the horizontal direction, and by 0 in the vertical direction may be assigned an index of 1. Index 2 may be assigned to direction information for the motion vector difference, which makes corrections by 0 in the horizontal direction and by +1 in the vertical direction. Index 3 may be assigned to direction information for a motion vector difference, which makes corrections by 0 in the horizontal direction and by -1 in the vertical direction.

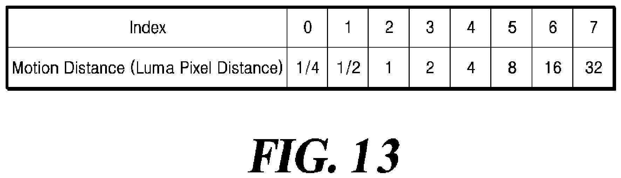

FIG. 13 is a diagram illustrating distance information of the motion vector difference, according to at least one embodiment of the present disclosure.

Referring to FIG. 13, the distance information of the motion vector difference may be composed of a luma pixel distance, which is a motion distance. The distance information of the motion vector difference may be composed of eight motion distances. Index 0 may be assigned to distance information of the motion vector difference, having a luma pixel distance of 1/4. Index 1 may be assigned to distance information of the motion vector difference, having a luma pixel distance of 1/2. Index 2 may be assigned to distance information for the motion vector difference, having a luma pixel distance of 1. Index 3 may be assigned to distance information for the motion vector difference, having a luma pixel distance of 2. Index 4 may be assigned to distance information for the motion vector difference, having a luma pixel distance of 4. Index 5 may be assigned to distance information for the motion vector difference, having a luma pixel distance of 8. Index 6 may be assigned to distance information for the motion vector difference, having a luma pixel distance of 16. Index 7 may be assigned to distance information of the motion vector difference, having a luma pixel distance of 32.

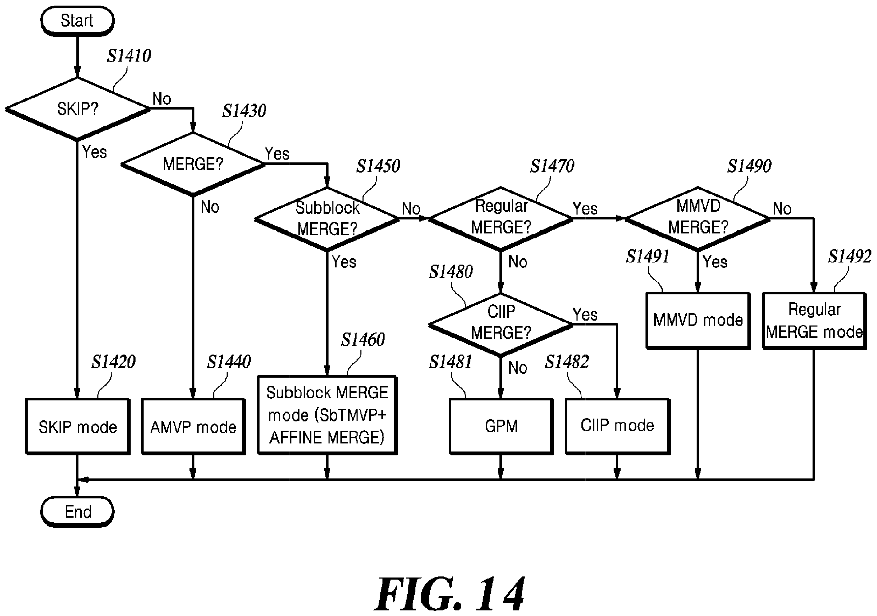

FIG. 14 is a flowchart of a method of applying inter prediction, according to at least one embodiment of the present disclosure.

Referring to FIG. 14, the method may determine if skip mode is to be applied (S1410). Upon determining skip mode is to be applied (S1410-YES), the method may apply the skip mode (S1420). Upon determining that skip mode is not to be applied (S1410-NO), the method may determine if merge mode is to be applied (S1430). Upon determining merge mode is not to be applied (S1430-NO), the method may apply adaptive motion vector prediction (AMVP) mode (S1440). Upon determining the merge mode is to be applied (S1430-YES), the method may determine if merge mode is applied to a subblock (S1450). Upon determining merge mode is applied to the subblock (S1450-YES), the method may apply merge mode to the subblock (S1460). The method may employ a subblock-based temporal motion vector prediction and an affine merge mode. Upon determining merge mode is not applied to the subblock (S1450-NO), the method may determine if a regular merge mode is applied (S1470).

If it is determined that the regular merge mode does not apply (S1470-NO), it may be determined if the CIIP mode applies (S1480). If CIIP mode is determined not to apply (S1480-NO), then geometric partitioning mode may be applied (S1481). If CIIP mode is determined to apply (S1480-YES), CIIP mode may be applied (S1482). If the regular merge mode is determined to apply (S1470-YES), it may be determined if the merge mode with motion vector difference is applied (S1490). If the merge mode with motion vector difference is determined to apply (S1490-YES), the merge mode with motion vector difference may be applied (S1491). If it is determined that the merge mode with motion vector difference does not apply (S1490-NO), the regular merge mode may be applied (S1492).

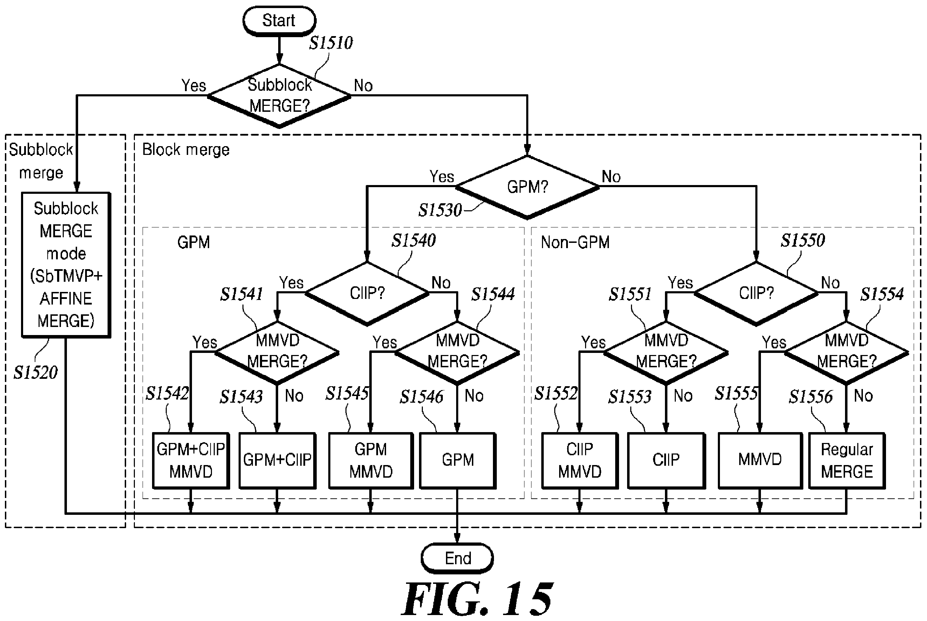

FIG. 15 is a flowchart of a method of applying a novel mode in inter prediction, according to at least one embodiment of the present disclosure. If a regular merge mode, rather than a subblock merge mode, is applied to the current block, it may be determined whether the current block is partitioned. Then, the prediction method of the current block may be determined. The prediction method of the current block may have an intra-inter prediction method and an inter-prediction method. Finally, it may be checked whether motion vector difference is used. By determining whether motion vector difference is used, it may be determined whether to compensate for motion information.

Referring to FIG. 15, the method may determine if a merge mode is applied to the subblock (S1510). If it is determined that the merge mode is applied to the subblock (S1510-YES), the merge mode may be applied to the subblock (S1520). The method may employ the subblock-based temporal motion vector prediction and the affine merge mode. If it is determined that the subblock does not have the merge mode applied (S1510-NO), it may be determined if the geometric partitioning mode is applied (S1530). If it is determined that the geometric partitioning mode is applied (S1530-YES), it may be determined if the CIIP mode is applied (S1540). If the CIIP mode is determined to apply (S1540-YES), it may be determined if the merge mode with motion vector difference applies (S1541). Upon determining that the merge mode with motion vector difference applies (S1541-YES), the method may apply a novel combined mode between the geometric partitioning mode, the CIIP mode, and the merge mode with motion vector difference (S1542). Upon determining that the merge mode with motion vector difference is not applied (S1541-NO), the method may apply a novel combined mode of the geometric partitioning mode and the CIIP mode (S1543).

If the CIIP mode is determined not to apply (S1540-NO), it may be determined if the merge mode with motion vector difference applies (S1544). If the merge mode with motion vector difference applies (S1544-YES), the method may apply a novel combined mode of the geometric partitioning mode and the merge mode with motion vector difference (S1545). If it is determined that the merge mode with motion vector difference is not applied (S1544-NO), then the geometric partitioning mode may be applied (S1546).

If it is determined that the geometric partitioning mode is not applied (S1530-NO), it may be determined if the CIIP mode is applied (S1550). If it is determined that the CIIP mode is applied (S1550-YES), it may be determined if the merge mode with motion vector difference is applied (S1551). Upon determining that the merge mode with motion vector difference applies (S1551-YES), the method may apply a novel combined mode of the CIIP mode and the merge mode with motion vector difference (S1552). If it is determined that the merge mode with motion vector difference is not applied (S1551-NO), the CIIP mode may be applied (S1553).

If the CIIP mode is determined not to be applied (S1550-NO), it may be determined if the merge mode with motion vector difference is applied (S1554). If the merge mode with motion vector difference is determined to be applied (S1554-YES), the merge mode with motion vector difference may be applied (S1555). If it is determined that the merge mode with motion vector difference does not apply (S1554-NO), the regular merge mode may be applied (S1556).

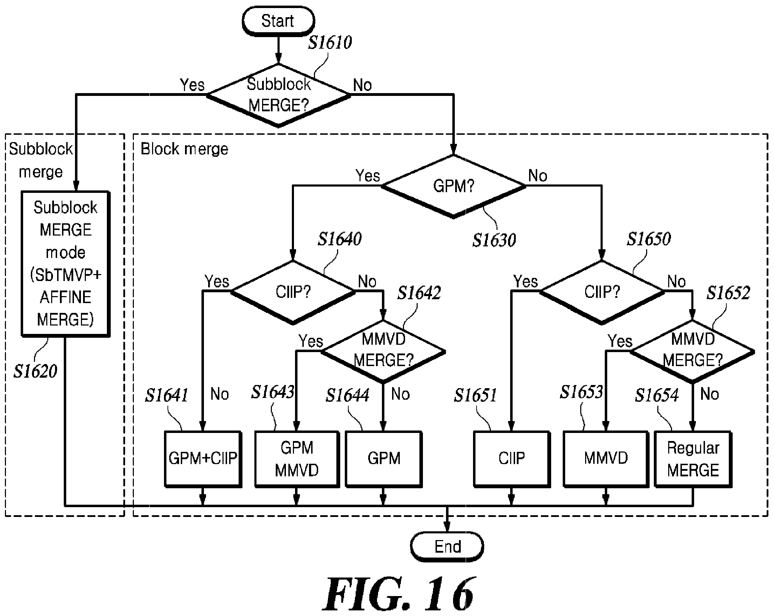

FIG. 16 is a flowchart of a method of applying a novel mode in inter prediction, according to another embodiment of the present disclosure.

Referring to FIG. 16, the method may determine if a subblock has the merge mode applied (S1610). If it is determined that the merge mode is applied to the subblock (S1610-YES), the merge mode may be applied to the subblock (S1620). The method may employ the subblock-based temporal motion vector prediction and the affine merge mode. If it is determined that the subblock does not have the merge mode applied (S1610-NO), it may be determined if the geometric partitioning mode is applied (S1630). If it is determined that the geometric partitioning mode applies (S1630-YES), it may be determined if the CIIP mode applies (S1640). Upon determining that the CIIP mode applies (S1640-YES), the method may apply the novel combined mode of the geometric partitioning mode and the CIIP mode (S1641).

If it is determined that the CIIP mode is not applied (S1640-NO), it may be determined if the merge mode with motion vector difference is applied (S1642). Upon determining that the merge mode with motion vector difference applies (S1642-YES), the method may apply the novel combined mode of the geometric partitioning mode and the merge mode with motion vector difference (S1643). If the merge mode with motion vector difference is determined not to apply (S1642-NO), the geometric partitioning mode may be applied (S1644).

If it is determined that the geometric partitioning mode does not apply (S1630-NO), it may be determined if the CIIP mode applies (S1650). If it is determined that the CIIP mode applies (S1650-YES), the CIIP mode may be applied (S1651). If the CIIP mode is determined not to apply (S1650-NO), the merge mode with motion vector difference may be applied (S1652). Upon determining that the merge mode with motion vector difference applies (S1652-YES), the method may apply the merge mode with motion vector difference (S1653). If it is determined that the merge mode with motion vector difference does not apply (S1652-NO), the regular merge mode may be applied (S1654).

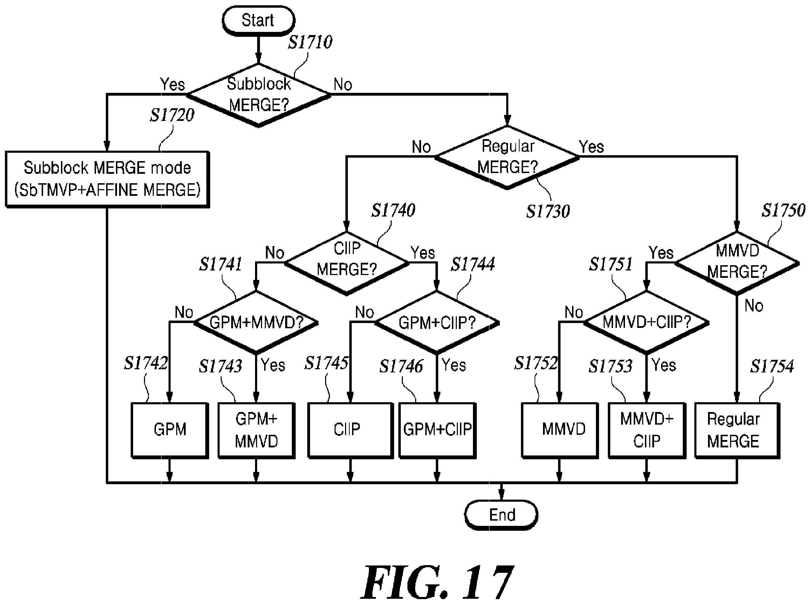

FIG. 17 is a flowchart of a method of applying a novel mode in inter prediction, according to yet another embodiment of the present disclosure.

Referring to FIG. 17, the method may determine if a subblock has the merge mode applied (S1710). If the merge mode is determined to be applied to the subblock (S1710-YES), the method may apply the merge mode to the subblock (S1720). The method may employ the subblock-based temporal motion vector prediction and the affine merge mode. If it is determined that the merge mode is not applied to the subblock (S1710-NO), it may be determined if the regular merge mode is applied (S1730). If it is determined that the regular merge mode does not apply (S1730-NO), it may be determined if the CIIP mode applies (S1740). If the CIIP mode is determined not to apply (S1740-NO), the method may determine whether to apply the novel combined mode of the geometric partitioning mode and the merge mode with motion vector difference (S1741). If it is determined that the novel combined mode of the geometric partitioning mode and the merge mode with motion vector difference is not applied (S1741-NO), the geometric partitioning mode may be applied (S1742). Upon determining that the novel combined mode of the geometric partitioning mode and the merge mode with motion vector difference is applied (S1741-YES), the method may apply the novel combined mode of the geometric partitioning mode and the merge mode with motion vector difference (S1743).

If the CIIP mode is determined to apply (S1740-YES), it may be determined if the novel combined mode of the geometric partitioning mode and the CIIP mode applies (S1744). If it is determined that the novel combined mode of the geometric partitioning mode and the CIIP mode does not apply (S1744-NO), the CIIP mode may be applied (S1745). Upon determining that the novel combined mode of the geometric partitioning mode and the CIIP mode is applied (S1744-YES), the method may apply the novel combined mode of the geometric partitioning mode and the CIIP mode (S1746).

If it is determined that the regular merge mode is applied (S1730-YES), it may be determined if the merge mode with motion vector difference is applied (S1750). If it is determined that the merge mode with motion vector difference is applied (S1750-YES), it may be determined if the novel combined mode of the CIIP mode and the merge mode with motion vector difference is applied (S1751). If it is determined that the novel combined mode of the CIIP mode and the merge mode with motion vector difference is not applied (S1751-NO), the merge mode with motion vector difference may be applied (S1752). Upon determining that the novel combined mode of the CIIP mode and the merge mode with motion vector difference is applied (S1751-YES), the method may apply the novel combined mode of the CIIP mode and the merge mode with motion vector difference (S1753). If it is determined that the merge mode with the motion vector difference is not applied (S1750-NO), the regular merge mode may be applied (S1754).

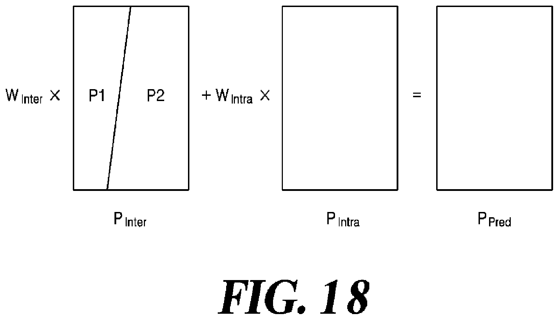

FIG. 18 is a diagram illustrating the novel combined mode of the geometric partitioning mode and the CIIP mode, according to at least one embodiment of the present disclosure.

Referring to FIG. 18, in the novel combined mode of the geometric partitioning mode and the CIIP mode, the current block may be partitioned into two regions by the geometric partitioning mode. The two regions may be P1 region and P2 region. The P1 and P2 regions may use different motion information to generate inter-prediction blocks independently. Weighted-averaging or weighted-summing the two independently generated inter-prediction blocks may generate the final inter-prediction block $P_{inter}$. The intra-prediction block $P_{intra}$ may be generated by using the planner mode. The intra-prediction block $P_{intra}$ may be generated by using the intra-prediction mode derived by using various methods such as Template-based Intra Mode Derivation (TIMD) or Decoder-side Intra Mode Derivation (DIMD). The final prediction block $P_{pred}$ may be generated by weighted averaging or weighted summing the final inter-prediction block $P_{inter}$ and the intra-prediction block $P_{intra}$. Here, the weighting value $W_{inter}$ applied to the final inter-prediction block $P_{inter}$ as well as the weighting value $W_{intra}$ applied to the intra-prediction block $P_{intra}$ may be arbitrarily determined.

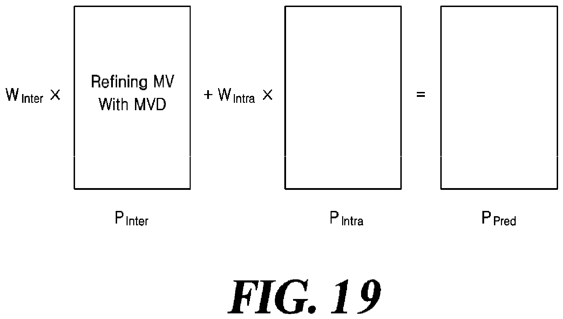

FIG. 19 is a diagram illustrating the novel combined mode of the CIIP mode and the merge mode with motion vector difference, according to at least one embodiment of the present disclosure.

Referring to FIG. 19, in the novel combined mode of the CIIP mode and the merge mode with motion vector difference, the inter-prediction block $P_{inter}$ may be generated by using corrected motion information generated by adding the motion vector difference to the motion vector derived from the merge mode. The intra-prediction block $P_{intra}$ may be generated by using the planner mode. The intra-prediction block $P_{intra}$ may be generated by using the intra-prediction mode derived by using various methods such as the Template-based Intra Mode Derivation or the Decoder-side Intra Mode Derivation. The final prediction block $P_{pred}$ may be generated by weighted averaging or weighted summing the inter-prediction block $P_{inter}$ and the intra-prediction block $P_{intra}$. Here, the weighting value $W_{inter}$ applied to the inter-prediction block $P_{inter}$ as well as the weighting value $W_{intra}$ applied to the intra-prediction block $P_{intra}$ may be arbitrarily determined.

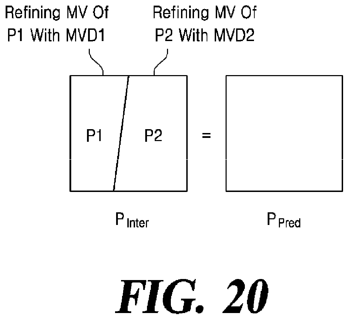

FIG. 20 is a diagram illustrating the novel combined mode of the geometric partitioning mode and the merge mode with motion vector difference, according to at least one embodiment of the present disclosure.

Referring to FIG. 20, in the novel combined mode of the geometric partitioning mode and the merge mode with motion vector difference, the current block may be partitioned into two regions by the geometric partitioning mode. The two regions may be the P1 region and the P2 region. The same motion vector difference information may be used for the P1 and P2 regions to correct the motion information of the P1 region and the motion information of the P2 region.

Different motion vector difference information may be used for the P1 and P2 regions to correct the motion information of the P1 region and the motion information of the P2 region. The P1 region and the P2 region may independently generate two inter-prediction blocks by using the corrected motion information. A final inter-prediction block $P_{inter}$ may be generated by weighted averaging or weighted summing the two independently generated inter-prediction blocks. The final inter-prediction block $P_{inter}$ may be equal to the final prediction block $P_{pred}$.

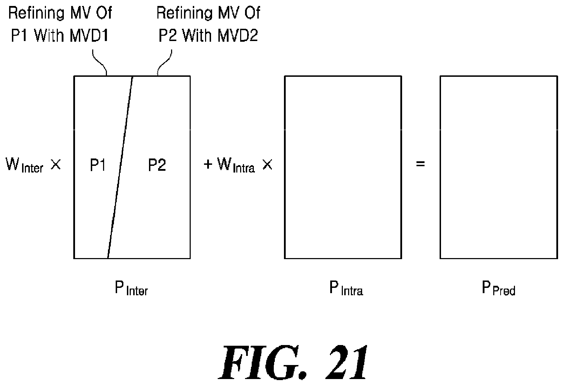

FIG. 21 is a diagram illustrating the novel combined mode between the geometric partitioning mode, the CIIP mode, and the merge mode with motion vector difference, according to at least one embodiment of the present disclosure.

Referring to FIG. 21, in the novel combined mode between the geometric partitioning mode, CIIP mode, and merge mode with motion vector difference, the current block may be partitioned into two regions by geometric partitioning mode. The two regions may be P1 region and P2 region. The same motion vector difference information may be used for the P1 and P2 regions to correct the motion information of the P1 region and the motion information of the P2 region. Different motion vector difference information may be used for the P1 and P2 regions to correct the motion information of the P1 region and the motion information of the P2 region. The P1 region and the P2 region may independently generate two inter-prediction blocks by using the corrected motion information. A final inter-prediction block $P_{inter}$ may be generated by weighted averaging or weighted summing the two independently generated inter-prediction blocks.

The intra-prediction block $P_{intra}$ may be generated by using the planner mode. The intra-prediction block $P_{intra}$ may be generated by using the intra-prediction mode derived by using various methods, such as the Template-based Intra Mode Derivation or the Decoder-side Intra Mode Derivation. A final prediction block $P_{pred}$ may be generated by weighted averaging or weighted summing the final inter prediction block $P_{inter}$ and the intra-prediction block $P_{intra}$. Here, the weighting value $W_{inter}$ applied to the final inter-prediction block $P_{inter}$ as well as the weighting value $W_{intra}$ applied to the intra-prediction block $P_{intra}$ may be arbitrarily determined.

Method for Decoder-side Motion Vector Refinement (DMVR) and Bi-Directional Optical Flow-based (BDOF) Motion Vector Refining Method

A DMVR method may be a method of refining a bi-directional motion vector prediction by a regular merge mode through a Bilateral Matching (BM) based motion vector searching during decoding. The DMVR method may be performed when the current block is decoded in regular merge mode. The BDOF-based motion vector refining method may be a method of searching the optimal motion vectors in 4x4 subblock units by using bi-directional motion vectors and performing a prediction based on these optimal motion vectors. The BDOF-based motion vector refining method may be performed when the current block has been decoded in the regular merge mode or the merge mode with motion vector difference.

In FIG. 15, when the merge mode with motion vector difference is applied (S1555), the method may apply the BDOF-based motion vector refining method. In FIG. 15, when the regular merge mode is applied (S1556), the DMVR method and the BDOF-based motion vector refining method may be applied. However, the present disclosure is not limited to such embodiments. The DMVR method and the BDOF-based motion vector refining method may also be applied when any merge mode is applied.

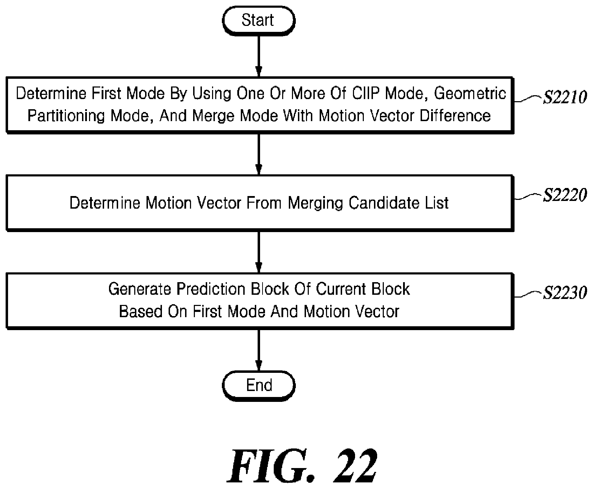

FIG. 22 is a diagram illustrating a video decoding process, according to an embodiment of the present disclosure.

Referring to FIG. 22, the decoding apparatus may determine a first mode based on at least one of a CIIP mode, a geometric partitioning mode, and a merge mode with motion vector difference (S2210). The decoding apparatus may determine a motion vector from a merging candidate list (S2220). The decoding apparatus may generate a prediction block of the current block based on the first mode and the motion vector (S2230).

When the first mode is a combined mode of the CIIP mode and the geometric partitioning mode, the step of determining the motion vector from the merging candidate list may include the step of determining motion vectors respectively for two partitioned regions from the merging candidate list. When the first mode is a combined mode of the CIIP mode and the geometric partitioning mode, the step of generating the prediction block of the current block may include the steps of generating a final inter-prediction block for the current block based on the two partitioned regions and the motion vectors for the two partitioned regions, generating an intra-prediction block for the current block based on at least one or more reference pixels adjacent to the current block, and generating the prediction block of the current block by weighted averaging the final inter-prediction block and the intra-prediction block.

The step of generating the final inter-prediction block for the current block may include the steps of generating inter-prediction blocks respectively for the two partitioned regions by using the motion vectors for the two partitioned regions, and generating the final inter-prediction block for the current block by combining or weighted averaging the inter-prediction blocks for the two partitioned regions.

When the first mode is a combined mode of the CIIP mode and the merge mode with motion vector difference, the step of generating the prediction block of the current block may include the steps of generating an inter-prediction block for the current block based on a refined motion vector, generating an intra-prediction block for the current block based on at least one or more reference pixels adjacent to the current block and generating the prediction block of the current block by weighted averaging the inter-prediction block and the intra-prediction block. The refined motion vector may be generated based on the motion vector and motion vector difference information.

When the first mode is a combined mode of the geometric partitioning mode and the merge mode with motion vector difference, the step of determining the motion vector from the merging candidate list may include the step of determining motion vectors respectively for two partitioned regions from the merging candidate list. When the first mode is the combined mode of the geometric partitioning mode and the merge mode with motion vector difference, the step of generating the prediction block of the current block may include the steps of generating inter-prediction blocks respectively for the two partitioned regions by using refined motion vectors, and generating the prediction block of the current block by combining or weighted averaging the inter-prediction blocks for the two partitioned regions. The refined motion vectors may be generated based on the motion vectors for the two partitioned regions and motion vector difference information.

When the first mode is a combined mode of the CIIP mode, the geometric partitioning mode, and the merge mode with motion vector difference, the step of determining the motion vector from the merging candidate list may include the step of determining motion vectors respectively for the two partitioned regions from the merging candidate list. When the first mode is the combined mode of the CIIP mode, the geometric partitioning mode, and the merge mode with motion vector difference, the step of generating the prediction block of the current block may include the steps of generating a final inter-prediction block for the current block based on the two partitioned regions and the refined motion vectors for the two partitioned regions, generating an intra-prediction block for the current block based on at least one or more reference pixels adjacent to the current block, and generating the prediction block of the current block by weighted averaging the final inter-prediction block and the intra-prediction block. The refined motion vectors may be generated based on the motion vectors for the two partitioned regions and motion vector difference information.

The step of generating the final inter-prediction block for the current block may include the steps of generating inter-prediction blocks respectively for the two partitioned regions by using the refined motion vectors for the two partitioned regions, and generating the final inter-prediction block for the current block by combining or weighted averaging the inter-prediction blocks for the two partitioned regions.

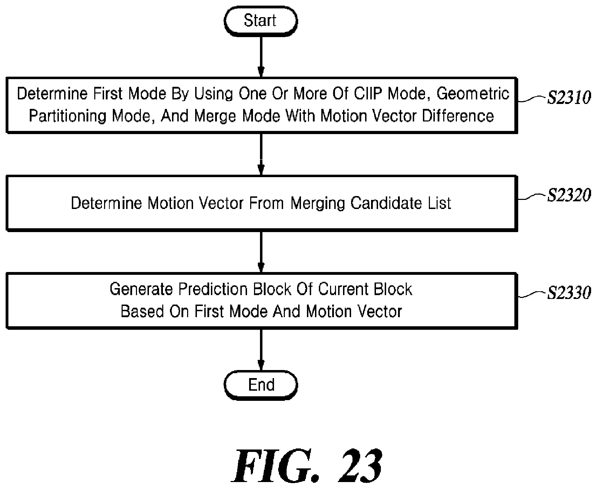

FIG. 23 is a diagram illustrating a video encoding process, according to an embodiment of the present disclosure.

Referring to FIG. 23, the encoding apparatus may determine a first mode based on at least one of a CIIP mode, a geometric partitioning mode, and a merge mode with motion vector difference (S2310). The encoding apparatus may determine a motion vector from a merging candidate list (S2320). The encoding apparatus may generate a prediction block of the current block based on the first mode and the motion vector (S2330).

When the first mode is a combined mode of the CIIP mode and the geometric partitioning mode, the step of determining the motion vector from the merging candidate list may include the step of determining motion vectors respectively for two partitioned regions from the merging candidate list. When the first mode is the combined mode of the CIIP mode and the geometric partitioning mode, the step of generating the prediction block of the current block may include the steps of generating a final inter-prediction block for the current block based on the two partitioned regions and motion vectors for the two partitioned regions, generating an intra-prediction block for the current block based on at least one or more reference pixels adjacent to the current block, and generating the prediction block of the current block by weighted averaging the final inter-prediction block and the intra-prediction block.

The step of generating the final inter-prediction block for the current block may include the steps of generating inter-prediction blocks respectively for the two partitioned regions by using the motion vectors for the two partitioned regions and generating the final inter-prediction block for the current block by combining or weighted averaging the inter-prediction blocks for the two partitioned regions.

When the first mode is a combined mode of the CIIP mode and the merge mode with motion vector difference, the step of generating the prediction block of the current block may include the steps of generating an inter-prediction block for the current block based on a refined motion vector, generating an intra-prediction block for the current block based on at least one or more reference pixels adjacent to the current block, and generating the prediction block of the current block by weighted averaging the inter-prediction block and the intra-prediction block. The refined motion vector may be generated based on the motion vector and motion vector difference information.

When the first mode is a combined mode of the geometric partitioning mode and the merge mode with motion vector difference, the step of determining the motion vector from the merging candidate list may include the step of determining motion vectors respectively for two partitioned regions from the merging candidate list. When the first mode is the combined mode of the geometric partitioning mode and the merge mode with motion vector difference, the step of generating the prediction block of the current block may include the steps of generating inter-prediction blocks respectively for the two partitioned regions by using refined motion vectors, and generating the prediction block of the current block by combining or weighted averaging the inter-prediction blocks for the two partitioned regions. The refined motion vectors may be generated based on the motion vectors for the two partitioned regions and motion vector difference information.

When the first mode is a combined mode of the CIIP mode, the geometric partitioning mode, and the merge mode with motion vector difference, the step of determining the motion vector from the merging candidate list may include the step of determining motion vectors respectively for the two partitioned regions from the merging candidate list. When the first mode is the combined mode of the CIIP mode, the geometric partitioning mode, and the merge mode with motion vector difference, the step of generating the prediction block of the current block may include generating a final inter-prediction block for the current block based on the two partitioned regions and refined motion vectors for the two partitioned regions, generating an intra-prediction block for the current block based on at least one or more reference pixels adjacent to the current block, and generating the prediction block of the current block by weighted averaging the final inter-prediction block and the intra-prediction block. The refined motion vectors may be generated based on the motion vectors for the two partitioned regions and motion vector difference information.

The step of generating the final inter-prediction block for the current block may include the steps of generating inter-prediction blocks respectively for the two partitioned regions by using the refined motion vectors for the two partitioned regions, and generating the final inter-prediction block for the current block by combining or weighted averaging the inter-prediction blocks for the two partitioned regions.

Although the steps in the respective flowcharts are described to be sequentially performed, the steps merely instantiate the technical idea of some embodiments of the present disclosure. Therefore, a person having ordinary skill in the art to which this disclosure pertains could perform the steps by changing the sequences described in the respective drawings or by performing two or more of the steps in parallel. Hence, the steps in the respective flowcharts are not limited to the illustrated chronological sequences.

It should be understood that the above description presents illustrative embodiments that may be implemented in various other manners. The functions described in some embodiments may be realized by hardware, software, firmware, and/or their combination. It should also be understood that the functional components described in this specification are labeled by "... unit" to strongly emphasize the possibility of their independent realization.

Meanwhile, various methods or functions described in some embodiments may be implemented as instructions stored in a non-transitory recording medium that can be read and executed by one or more processors. The non-transitory recording medium may include, for example, various types of recording devices in which data is stored in a form readable by a computer system. For example, the non-transitory recording medium may include storage media such as erasable programmable read-only memory (EPROM), flash drive, optical drive, magnetic hard drive, and solid state drive (SSD) among others.

Although embodiments of the present disclosure have been described for illustrative purposes, those having ordinary skill in the art to which this disclosure pertains should appreciate that various modifications, additions, and substitutions are possible, without departing from the idea and scope of the present disclosure. Therefore, embodiments of the present disclosure have been described for the sake of brevity and clarity. The scope of the technical idea of the embodiments of the present disclosure is not limited by the illustrations. Accordingly, those having ordinary skill in the art to which this disclosure pertains should understand that the scope of the present disclosure is not to be limited by the above explicitly described embodiments but by the claims and equivalents thereof.

(Reference Number)

122: intra predictor
510: entropy decoder
542: intra predictor

**CROSS-REFERENCE TO RELATED APPLICATIONS**

This application claims priority to Korean Patent Application No. 10-2022-0000677 filed on January 4, 2022, and Korean Patent Application No. 10-2022-0190744 filed on December 30, 2022, the entire disclosures of each of which are incorporated herein by reference.

**Claims**

1. A method of decoding video, the method comprising:

   determining a first mode based on at least one of a combined inter/intra prediction (CIIP) mode, a geometric partitioning mode, and a merge mode with motion vector difference;
   determining a motion vector from a merging candidate list; and
   generating a prediction block of a current block based on the first mode and the motion vector.

**2.** The method of claim 1, wherein when the first mode is a combined mode of the CIIP mode and the geometric partitioning mode, determining the motion vector from the merging candidate list comprises:

determining motion vectors respectively for two partitioned regions from the merging candidate list, and wherein when the first mode is the combined mode of the CIIP mode and the geometric partitioning mode, generating the prediction block of the current block comprises:

generating a final inter-prediction block for the current block based on the two partitioned regions and the motion vectors for the two partitioned regions;
generating an intra-prediction block for the current block based on at least one or more reference pixels adjacent to the current block; and
generating the prediction block of the current block by weighted averaging the final inter-prediction block and the intra-prediction block.

**3.** The method of claim 2, wherein generating the final inter-prediction block for the current block comprises:

generating inter-prediction blocks respectively for the two partitioned regions by using the motion vectors for the two partitioned regions; and
generating the final inter-prediction block for the current block by combining or weighted averaging the inter-prediction blocks for the two partitioned regions.

**4.** The method of claim 1, wherein when the first mode is a combined mode of the CIIP mode and the merge mode with motion vector difference, generating the prediction block of the current block comprises:

generating an inter-prediction block for the current block based on a refined motion vector;
generating an intra-prediction block for the current block based on at least one or more reference pixels adjacent to the current block; and
generating the prediction block of the current block by weighted averaging the inter-prediction block and the intra-prediction block,
wherein the refined motion vector is generated based on the motion vector and motion vector difference information.

**5.** The method of claim 1, wherein when the first mode is a combined mode of the geometric partitioning mode and the merge mode with motion vector difference, determining the motion vector from the merging candidate list comprises:

determining motion vectors respectively for two partitioned regions from the merging candidate list, and wherein when the first mode is the combined mode of the geometric partitioning mode and the merge mode with motion vector difference, generating the prediction block of the current block comprises:

generating inter-prediction blocks respectively for the two partitioned regions by using refined motion vectors; and
generating the prediction block of the current block by combining or weighted averaging the inter-prediction blocks for the two partitioned regions,
wherein the refined motion vectors are generated based on the motion vectors for the two partitioned regions and motion vector difference information.

**6.** The method of claim 1, wherein when the first mode is a combined mode of the CIIP mode, the geometric partitioning mode, and the merge mode with motion vector difference, determining the motion vector from the merging candidate list comprises:

determining motion vectors respectively for two partitioned regions from the merging candidate list, and wherein when the first mode is the combined mode of the CIIP mode, the geometric partitioning mode, and the merge mode with motion vector difference, generating the prediction block of the current block comprises:

generating a final inter-prediction block for the current block based on the two partitioned regions and refined motion vectors for the two partitioned regions;
generating an intra-prediction block for the current block based on at least one or more reference pixels adjacent to the current block; and
generating the prediction block of the current block by weighted averaging the final inter-prediction block and the intra-prediction block,
wherein the refined motion vectors are generated based on the motion vectors for the two partitioned regions and motion vector difference information.

7. The method of claim 6, wherein generating the final inter-prediction block for the current block comprises:

generating inter-prediction blocks respectively for the two partitioned regions by using the refined motion vectors for the two partitioned regions; and
generating the final inter-prediction block for the current block by combining or weighted averaging the inter-prediction blocks for the two partitioned regions.

8. A method of encoding video, the method comprising:

determining a first mode based on at least one of a combined inter/intra prediction (CIIP) mode, a geometric partitioning mode, and a merge mode with motion vector difference;
determining a motion vector from a merging candidate list; and
generating a prediction block of a current block based on the first mode and the motion vector.

9. The method of claim 8, wherein when the first mode is a combined mode of the CIIP mode and the geometric partitioning mode, determining the motion vector from the merging candidate list comprises:

determining motion vectors respectively for two partitioned regions from the merging candidate list, and
wherein when the first mode is the combined mode of the CIIP mode and the geometric partitioning mode, generating the prediction block of the current block comprises:

generating a final inter-prediction block for the current block based on the two partitioned regions and the motion vectors for the two partitioned regions;
generating an intra-prediction block for the current block based on at least one or more reference pixels adjacent to the current block; and
generating the prediction block of the current block by weighted averaging the final inter-prediction block and the intra-prediction block.

10. The method of claim 9, wherein generating the final inter-prediction block for the current block comprises:

generating inter-prediction blocks respectively for the two partitioned regions by using the motion vectors for the two partitioned regions; and
generating the final inter-prediction block for the current block by combining or weighted averaging the inter-prediction blocks for the two partitioned regions.

11. The method of claim 8, wherein when the first mode is a combined mode of the CIIP mode and the merge mode with motion vector difference, generating the prediction block of the current block comprises:

generating an inter-prediction block for the current block based on a refined motion vector;
generating an intra-prediction block for the current block based on at least one or more reference pixels adjacent to the current block; and
generating the prediction block of the current block by weighted averaging the inter-prediction block and the intra-prediction block,
wherein the refined motion vector is generated based on the motion vector and motion vector difference information.

12. The method of claim 8, wherein when the first mode is a combined mode of the geometric partitioning mode and the merge mode with motion vector difference, determining the motion vector from the merging candidate list comprises:

determining motion vectors respectively for two partitioned regions from the merging candidate list, and
wherein when the first mode is the combined mode of the geometric partitioning mode and the merge mode with motion vector difference, generating the prediction block of the current block comprises:

generating inter-prediction blocks respectively for the two partitioned regions by using refined motion vectors; and
generating the prediction block of the current block by combining or weighted averaging the inter-prediction blocks for the two partitioned regions,
wherein the refined motion vectors are generated based on the motion vectors for the two partitioned regions and motion vector difference information.

13. The method of claim 8, wherein when the first mode is a combined mode of the CIIP mode, the geometric partitioning mode, and the merge mode with motion vector difference, determining the motion vector from the merging candidate list comprises:

determining motion vectors respectively for two partitioned regions from the merging candidate list, and
wherein when the first mode is the combined mode of the CIIP mode, the geometric partitioning mode, and the merge mode with motion vector difference, generating the prediction block of the current block comprises:

generating a final inter-prediction block for the current block based on the two partitioned regions and refined motion vectors for the two partitioned regions;
generating an intra-prediction block for the current block based on at least one or more reference pixels adjacent to the current block; and
generating the prediction block of the current block by weighted averaging the final inter-prediction block and the intra-prediction block,
wherein the refined motion vectors are generated based on the motion vectors for the two partitioned regions and motion vector difference information.

14. The method of claim 13, wherein generating the final inter-prediction block for the current block comprises:

generating inter-prediction blocks respectively for the two partitioned regions by using the refined motion vectors for the two partitioned regions; and
generating the final inter-prediction block for the current block by combining or weighted averaging the inter-prediction blocks for the two partitioned regions.

15. A computer-readable recording medium storing a bitstream generated by a video encoding method that comprises:

determining a first mode based on at least one of a combined inter/intra prediction (CIIP) mode, a geometric partitioning mode, and a merge mode with motion vector difference;
determining a motion vector from a merging candidate list; and
generating a prediction block of a current block based on the first mode and the motion vector.

**FIG. 1**

EP 4 459 985 A1

**FIG. 2**

**FIG. 3A**

**FIG. 3B**

B2    B0  B1

A0

A1

# FIG. 4

**FIG. 5**

Reference Pixel

Reference Block ($P_{inter}$)

Current Block

Planar Block ($P_{Planar}$)

Reference Picture

Current Picture

$W_{inter} \times$ Reference Block ($P_{inter}$) $+ W_{intra} \times$ Planar Block ($P_{Planar}$) $=$ Combined Inter/Intra Prediction ($P_{CIIP}$)

# FIG. 6

**FIG. 7**

| Encoding Or Not Of Intra-prediction Mode | | Weight (w) |
|---|---|---|
| Upper Neighboring Block (A) | Left Neighboring Block (L) | |
| O | O | 3 |
| O | X | 2 |
| X | O | 2 |
| X | X | 1 |

# FIG. 8

**FIG. 9**

**FIG. 10A**

**FIG. 10B**

| merge_gpm_partition_idx | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| angleIdx | 0 | 0 | 2 | 2 | 2 | 2 | 3 | 3 | 3 | 3 | 4 | 4 | 4 | 4 | 5 | 5 |
| distanceIdx | 1 | 3 | 0 | 1 | 2 | 3 | 0 | 1 | 2 | 3 | 0 | 1 | 2 | 3 | 0 | 1 |
| merge_gpm_partition_idx | 16 | 17 | 18 | 19 | 20 | 21 | 22 | 23 | 24 | 25 | 26 | 27 | 28 | 29 | 30 | 31 |
| angleIdx | 5 | 5 | 8 | 8 | 11 | 11 | 11 | 11 | 12 | 12 | 12 | 12 | 13 | 13 | 13 | 13 |
| distanceIdx | 2 | 3 | 1 | 3 | 0 | 1 | 2 | 3 | 0 | 1 | 2 | 3 | 0 | 1 | 2 | 3 |
| merge_gpm_partition_idx | 32 | 33 | 34 | 35 | 36 | 37 | 38 | 39 | 40 | 41 | 42 | 43 | 44 | 45 | 46 | 47 |
| angleIdx | 14 | 14 | 14 | 14 | 16 | 16 | 18 | 18 | 18 | 19 | 19 | 19 | 20 | 20 | 20 | 21 |
| distanceIdx | 0 | 1 | 2 | 3 | 1 | 3 | 1 | 2 | 3 | 1 | 2 | 3 | 1 | 2 | 3 | 1 |
| merge_gpm_partition_idx | 48 | 49 | 50 | 51 | 52 | 53 | 54 | 55 | 56 | 57 | 58 | 59 | 60 | 61 | 62 | 63 |
| angleIdx | 21 | 21 | 24 | 24 | 27 | 27 | 27 | 28 | 28 | 28 | 29 | 29 | 29 | 30 | 30 | 30 |
| distanceIdx | 2 | 3 | 1 | 3 | 1 | 2 | 3 | 1 | 2 | 3 | 1 | 2 | 3 | 1 | 2 | 3 |

*FIG. 11*

| Index | Horizontal | Vertical |
|-------|-----------|----------|
| 0 | +1 | 0 |
| 1 | −1 | 0 |
| 2 | 0 | +1 |
| 3 | 0 | −1 |

# FIG. 12

| Index | 0 | 1 | 2 | 3 | 4 | 5 | 6 | 7 |
|---|---|---|---|---|---|---|---|---|
| Motion Distance (Luma Pixel Distance) | 1/4 | 1/2 | 1 | 2 | 4 | 8 | 16 | 32 |

# FIG. 13

**FIG. 14**

**FIG. 15**

EP 4 459 985 A1

**FIG. 16**

**FIG. 17**

$$W_{Inter} \times \boxed{\begin{array}{c|c} P1 & P2 \end{array}} + W_{Intra} \times \boxed{\phantom{P_{Intra}}} = \boxed{\phantom{P_{Pred}}}$$

P Inter          P Intra          P Pred

# FIG. 18

$$W_{Inter} \times \boxed{\begin{array}{c} \text{Refining MV} \\ \text{With MVD} \end{array}} + W_{Intra} \times \boxed{\phantom{XXXXX}} = \boxed{\phantom{XXXXX}}$$

$$P_{Inter} \qquad\qquad\qquad P_{Intra} \qquad\qquad P_{Pred}$$

# FIG. 19

Refining MV Of
P1 With MVD1

Refining MV Of
P2 With MVD2

P1 / P2 = 

$P_{Inter}$

$P_{Pred}$

# FIG. 20

Refining MV Of        Refining MV Of
P1 With MVD1         P2 With MVD2

$W_{Inter} \times$ | P1 / P2 | $+ W_{Intra} \times$ | | $=$ | |

$P_{Inter}$              $P_{Intra}$              $P_{Pred}$

# FIG. 21

FIG. 22

```
                        ╭─────────╮
                        │  Start  │
                        ╰─────────╯
                             │
                             ▼
     ┌────────────────────────────────────────────────────┐
     │ Determine First Mode By Using One Or More Of CIIP   │──S2310
     │ Mode, Geometric Partitioning Mode, And Merge Mode   │
     │ With Motion Vector Difference                       │
     └────────────────────────────────────────────────────┘
                             │
                             ▼
     ┌────────────────────────────────────────────────────┐
     │     Determine Motion Vector From Merging            │──S2320
     │            Candidate List                           │
     └────────────────────────────────────────────────────┘
                             │
                             ▼
     ┌────────────────────────────────────────────────────┐
     │       Generate Prediction Block Of Current Block    │──S2330
     │         Based On First Mode And Motion Vector       │
     └────────────────────────────────────────────────────┘
                             │
                             ▼
                        ╭─────────╮
                        │   End   │
                        ╰─────────╯
```

# *FIG. 23*

| | INTERNATIONAL SEARCH REPORT | International application No. |
|---|---|---|
| | | **PCT/KR2023/000130** |

**A. CLASSIFICATION OF SUBJECT MATTER**

**H04N 19/107**(2014.01)i; **H04N 19/117**(2014.01)i; **H04N 19/176**(2014.01)i; **H04N 19/70**(2014.01)i; **H04N 19/109**(2014.01)i; **H04N 19/513**(2014.01)i

According to International Patent Classification (IPC) or to both national classification and IPC

**B. FIELDS SEARCHED**

Minimum documentation searched (classification system followed by classification symbols)

H04N 19/107(2014.01); H04N 19/105(2014.01); H04N 19/109(2014.01); H04N 19/11(2014.01); H04N 19/13(2014.01); H04N 19/159(2014.01); H04N 19/513(2014.01); H04N 19/53(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CIIP(Combined Inter Intra Prediction), 기하학적 분할 모드(Geometry Partition Mode, GPM), 움직임 벡터 차분을 이용한 머지 모드(Merge mode with Motion Vector Difference, MMVD), 가중 평균 (weighted average), 예측(prediction), 머지 후보 리스트(merge candidate list)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0144944 A (SAMSUNG ELECTRONICS CO., LTD.) 30 November 2021 (2021-11-30)<br>See claim 1. | 1,8,15 |
| A | | 2-7,9-14 |
| A | KR 10-2021-0106019 A (SAMSUNG ELECTRONICS CO., LTD.) 27 August 2021 (2021-08-27)<br>See claims 1-4. | 1-15 |
| A | WO 2020-180159 A1 (LG ELECTRONICS INC.) 10 September 2020 (2020-09-10)<br>See claims 1-14. | 1-15 |
| A | KR 10-2020-0083337 A (ELECTRONICS AND TELECOMMUNICATIONS RESEARCH INSTITUTE et al.) 08 July 2020 (2020-07-08)<br>See claims 1-18. | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 April 2023** | **26 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/000130**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2021-0094530 A (BEIJING BYTEDANCE NETWORK TECHNOLOGY CO., LTD. et al.) 29 July 2021 (2021-07-29)<br>See claims 1-68. | 1-15 |

Form PCT/ISA/210 (second sheet) (July 2022)

INTERNATIONAL SEARCH REPORT
Information on patent family members

International application No.

**PCT/KR2023/000130**

| Patent document cited in search report | | | Publication date (day/month/year) | Patent family member(s) | | | Publication date (day/month/year) |
|---|---|---|---|---|---|---|---|
| KR | 10-2021-0144944 | A | 30 November 2021 | EP | 3866470 | A1 | 18 August 2021 |
| | | | | KR | 10-2332528 | B1 | 01 December 2021 |
| | | | | US | 2021-0360277 | A1 | 18 November 2021 |
| | | | | WO | 2020-076097 | A1 | 16 April 2020 |
| KR | 10-2021-0106019 | A | 27 August 2021 | EP | 3855738 | A1 | 28 July 2021 |
| | | | | KR | 10-2292620 | B1 | 24 August 2021 |
| | | | | US | 11259044 | B2 | 22 February 2022 |
| | | | | US | 2021-0329292 | A1 | 21 October 2021 |
| | | | | US | 2022-0141484 | A1 | 05 May 2022 |
| | | | | WO | 2020-060158 | A1 | 26 March 2020 |
| WO | 2020-180159 | A1 | 10 September 2020 | | None | | |
| KR | 10-2020-0083337 | A | 08 July 2020 | US | 2022-0060714 | A1 | 24 February 2022 |
| | | | | WO | 2020-139032 | A1 | 02 July 2020 |
| KR | 10-2021-0094530 | A | 29 July 2021 | EP | 3871410 | A1 | 01 September 2021 |
| | | | | JP | 2022-508177 | A | 19 January 2022 |
| | | | | US | 11095917 | B2 | 17 August 2021 |
| | | | | US | 11115676 | B2 | 07 September 2021 |
| | | | | US | 2021-0160525 | A1 | 27 May 2021 |
| | | | | US | 2021-0160533 | A1 | 27 May 2021 |
| | | | | US | 2021-0377561 | A1 | 02 December 2021 |
| | | | | WO | 2020-108649 | A1 | 04 June 2020 |
| | | | | WO | 2020-108650 | A1 | 04 June 2020 |
| | | | | WO | 2020-108651 | A1 | 04 June 2020 |
| | | | | WO | 2020-108652 | A1 | 04 June 2020 |

Form PCT/ISA/210 (patent family annex) (July 2022)

**REFERENCES CITED IN THE DESCRIPTION**

**Patent documents cited in the description**

- KR 1020220000677
- KR 1020220190744